# EUROPÄISCHE PATENTSCHRIFT

(11) **EP 1 442 085 B1**
(45) Veröffentlichungstag und Bekanntmachung des Hinweises auf die Patenterteilung: **09.03.2005**
(21) Anmeldenummer: 02790301.2
(22) Anmeldetag: 22.10.2002
(51) Int. Cl.: C09B 67/00, C09D 11/00, C07D 233/40

(54) **FARBMITTELZUBEREITUNGEN**
DYEING FORMULATIONS
PREPARATIONS DE COLORANTS

(30) Priorität: 30.10.2001 DE 10153098
(43) Veröffentlichungstag der Anmeldung: 04.08.2004
(73) Patentinhaber: BASF AKTIENGESELLSCHAFT, 67056 Ludwigshafen (DE)
(72) Erfinder: FREYBERG, Dieter, 67308 Einselthum (DE); RAULFS, Friedrich-Wilhelm, 68161 Mannheim (DE); SIEMENSMEYER, Karl, 67227 Frankenthal (DE); FRECHE, Mike, 67304 Kerzenheim (DE)
(86) Internationale Anmeldenummer: PCT/EP2002/011784
(87) Internationale Veröffentlichungsnummer: WO 2003/037990

(56) Entgegenhaltungen:
- EP-A- 1 088 860
- WO-A-99/01516
- FR-A- 1 513 899
- GB-A- 2 086 929

## Beschreibung

Die vorliegende Erfindung betrifft Farbmittelzubereitungen, welche folgende Bestandteile enthalten:
a) mindestens ein Farbmittel ausgewählt aus in Wasser schwer löslichen Farbmitteln a1) und wasserlöslichen Farbstoffen a2),
b) Wasser,
c) im Falle von in Wasser praktisch nicht oder schwer löslichen Farbmitteln a1) mindestens ein Dispergiermittel und
d) mindestens eine Verbindung der allgemeinen Formel I 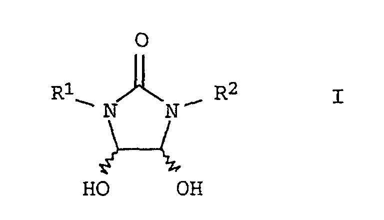
wobei in Formel I die Variablen wie folgt definiert sind:
- R¹, R²: unabhängig voneinander ausgewählt aus
Wasserstoff,
C₁-C₄-Alkyl,
CH₂-O-R³, wobei
- R³: Wasserstoff oder C₁-C₄-Alkyl bedeutet.

Weiterhin betrifft die Erfindung die Verwendung dieser Farbmittelzubereitungen als Tinten für das Ink-Jet-Verfahren sowie ein Verfahren zum Bedrucken von flächigen oder dreidimensional gestalteten Substraten im Ink-Jet-Verfahren, bei welchem diese Farbmittelzubereitungen eingesetzt werden.

An Tinten, die beim Ink-Jet-Verfahren (Tintenstrahldruckverfahren wie Thermal Ink Jet, Piezo Ink Jet, Continuous Ink Jet, Valve Jet) eingesetzt werden, werden hohe technische Anforderungen gestellt: Sie müssen zum Drucken geeignete Viskosität und Oberflächenspannung aufweisen, sie müssen lagerstabil sein, d.h., sie sollen nicht koagulieren oder flokulieren, und sie dürfen nicht zur Verstopfung der Druckerdüse führen, was insbesondere bei dispergierten, also nicht gelöste Farbmittelteilchen enthaltenden Tinten problematisch sein kann. Die Anforderungen an die Lagerstabilität dieser Tinten beinhaltet zusätzlich, dass sich die dispergierten Farbmittelteilchen nicht absetzen. Schließlich müssen die Tinten im Falle des Continuous Ink Jet stabil gegen den Zusatz von Leitsalzen sein und bei Erhöhung des Ionengehaltes keine Tendenz zum Ausflocken zeigen. Außerdem müssen die erhaltenen Drucke den koloristischen Anforderungen genügen, d.h. hohe Brillanz und Farbtiefe zeigen, und gute Echtheiten, z.B. Reibechtheit, Lichtechtheit, Wasserechtheit und Nassreibechtheit, und gutes Trocknungsverhalten aufweisen.

Aus der WO 99/01516 sind pigmenthaltige Ink-Jet-Tinten bekannt, deren Anschreibfähigkeit und Lagerfähigkeit sich jedoch noch verbessern lassen.

Aus EP-A 1 088 860 sind wässrige Tinten bekannt, die neben einem Pigment eine Verbindung der allgemeinen Formel II a oder II b 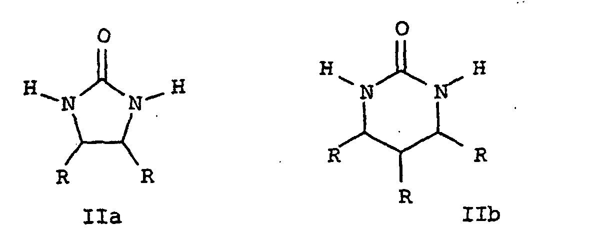 enthalten, in denen die Reste R gleich oder verschieden sind und Wasserstoff, Methyl oder Ethyl bedeuten. Die Lagerfähigkeit der offenbarten Tinten ist jedoch für einige Zwecke noch nicht ausreichend.

Aufgabe der vorliegenden Erfindung war es, neue Farbmittelzubereitungen bereitzustellen, welche gegenüber dem Stand der Technik vorteilhafte Anwendung im ink-Jet-Verfahren finden können und insbesondere gutes Anschreib- und Dauerschreibverhalten bei gutem Trocknungsverhalten aufweisen.

Demgemäß wurden die eingangs definierten Farbmittelzubereitungen gefunden.

Die erfindungsgemäßen Farbmittelzubereitungen können in Wasser schwerlösliches, dispergiertes Farbmittel a1) (feinteilige, organische oder anorganische Pigmente oder im Wasser/Lösungsmittel-Gemisch praktisch nicht lösliche Farbmittel) oder gelöstes Farbmittel a2) (im Wasser/Lösungsmittel-Gemisch lösliche Farbstoffe) enthalten. Selbstverständlich können die erfindungsgemäßen Farbmittelzubereitungen auch Farbmittelmischungen enthalten, vorzugsweise liegt jedoch nur ein Farbmittel vor. Bevorzugt sind erfindungsgemäße Farbmittelzubereitungen auf Pigmentbasis. Als Schönungsmittel können diese Pigmentzubereitungen im Farbton dem Pigment ähnliche lösliche Farbstoffe, insbesondere Direkt-, Säureoder Reaktivfarbstoffe enthalten.

Im folgenden sind Beispiele für geeignete Pigmente a1) genannt, wobei die Küpenfarbstoffe aufgrund der Überschneidungen mit den organischen Pigmenten mitaufgeführt sind.

Organische Pigmente:
- Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
- Disazopigmente: C.I. Pigment Orange 16, 34 und 44;
   C.I. Pigment Red 144, 166, 214 und 242; C.I. Pigment Yellow 12, 13, 14, 16, 17, 81, 83, 106, 113, 126, 127, 155, 174, 176 und 188;
- Anthanthronpigmente: C.I. Pigment Red 168 (C.I. Vat Orange 3);
- Anthrachinonpigmente: C.I. Pigment Yellow 147 und 177; C.I. Pigment Violet 31;
- Anthrachinonpigmente: C.I. Pigment Yellow 147 und 177; C.I. Pigment Violet 31;
- Anthrapyrimidinpigmente: C.I. Pigment Yellow 108 (C.I. Vat Yellow 20);
- Chinacridonpigmente: C.I. Pigment Red 122, 202 und 206; C.I. Pigment Violet 19;
- Chinophthalonpigmente: C.I. Pigment Yellow 138;
- Dioxazinpigmente: C.I. Pigment Violet 23 und 37;
- Flavanthronpigmente: C.I. Pigment Yellow 24 (C.I. Vat Yellow 1);
- Indanthronpigmente: C.I. Pigment Blue 60 (C.I. Vat Blue 4) und 64 (C.I. Vat Blue 6);
- Isoindolinpigmente: C.I. Pigment Orange 69; C.I. Pigment Red 260; C.I. Pigment Yellow 139 und 185;
- Isoindolinonpigmente: C.I. Pigment Orange 61; C.I. Pigment Red 257 und 260; C.I. Pigment Yellow 109, 110, 173 und 185;
- Isoviolanthronpigmente: C.I. Pigment Violet 31 (C.I. Vat Violet 1);
- Metallkomplexpigmente: C.I. Pigment Yellow 117, 150 und 153; C.I. Pigment Green 8;
- Perinonpigmente: C.I. Pigment Orange 43 (C.I. Vat Orange 7); C.I. Pigment Red 194 (C.I. Vat Red 15);
- Perylenpigmente: C.I. Pigment Black 31 und 32; C.I. Pigment Red 123, 149, 178, 179 (C.I. Vat Red 23), 190 (C.I. Vat Red 29) und 224; C.I. Pigment violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216 (C.I. Vat Orange 4);
- Thioindigopigmente: C.I. Pigment Red 88 und 181 (C.I. Vat Red 1); C.I. Pigment Violet 38 (C.I. Vat Violet 3);
- Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
- C.I. Pigment Yellow 101 (Aldazingelb);
- C.I. Pigment Brown 22;

Küpenfarbstoffe (außer den bereits oben genannten) :
- C.I. Vat Yellow 2, 3, 4, 5, 9, 10, 12, 22, 26, 33, 37, 46, 48, 49 und 50;
- C.I. Vat Orange 1, 2, 5, 9, 11, 13, 15, 19, 26, 29, 30 und 31;
- C.I. Vat Red 2, 10, 12, 13, 14, 16, 19, 21, 31, 32, 37, 41, 51, 52 und 61;
- C.I. Vat Violet 2, 9, 13, 14, 15, 17 und 21;
- C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
- C.I. Vat Green 1, 2, 3, 5, 7, 8, 9, 13, 14, 17, 26, 29, 30, 31, 32, 33, 40, 42, 43, 44 und 49;
- C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84;
- C.I. Vat Black 1, 2, 7, 8, 9, 13, 14, 16, 19, 20, 22, 25, 27, 28, 29, 30, 31, 32, 34, 36, 56, 57, 58, 63, 64 und 65;
anorganische Pigmente:
- Weißpigmente: Titandioxid (C.I. Pigment White 6), Zinkweiß, Farbenzinkoxid; Zinksulfid, Lithopone; Bleiweiß;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36) ; Ultramarinblau; Eisenblau (C.I. Pigment Blue 27); Manganblau; Ultramarinviolett; Kobalt- und Manganviolett; Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinellund Korundphasen (C.I. Pigment Brown 24, 29 und 31), Chromorange;
   Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
- Interferenzpigmente: Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphthol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße zu nennen.

Beispiele für besonders bevorzugte Pigmente sind im einzelnen: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Diese Pigmente können vorteilhaft zur Erstellung von Ink-Jet-Tintensets auf Basis der erfindungsgemäßen Farbmittelzubereitungen eingesetzt werden. Der Gehalt der einzelnen Tinten an den jeweiligen Pigmenten ist dabei an die jeweiligen Erfordernisse (z.B. Trichromie) anzupassen.

Folgende Pigmentkombinationen sind besonders zu empfehlen:
- C.I. Pigment Yellow 138, C.I. Pigment Violet 19, C.I. Pigment Blue 15:3 und C.I. Pigment Black 7;
- C.I. Pigment Yellow 138, C.I. Pigment Red 122, C.I. Pigment Blue 15:3 oder 15:4 und C.I. Pigment Black 7;
- C.I. Pigment Yellow 138, C.I. Pigment Violet 19, C.I. Pigment Blue 15:3, C.I. Pigment Black 7, C.I. Pigment Orange 43 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 5 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 38 und C.I. Pigment Green 7;
- C.I. Pigment Yellow 138, C.I. Pigment Red 122, C.I. Pigment Blue 15:3 oder 15:4, C.I. Pigment Black 7, C.I. Pigment Orange 43 und C.I. Pigment Green 7.

Als Farbstoffe a1), die im Wasser/Lösungsmittel-Gemisch im wesentlichen unlöslich sind, eignen sich neben den bereits genannten Küpenfarbstoffen insbesondere Azo-, Anthrachinon-, Chinophthalon-, Benzodifuran-, Methin- und Azamethinfarbstoffe, die frei von sauren bzw. ionischen Gruppen sind.

Beispiele für geeignete Farbstoffe a1) sind im einzelnen:
- C.I. Disperse Yellow 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 179, 180, 181, 182, 183, 184, 184:1, 198, 200, 201, 202, 203, 204, 205, 206, 207, 208, 209, 210, 211, 212, 213, 214, 215, 216, 217, 218, 219, 220, 221, 222, 223, 224, 225, 226, 227 und 228;
- C.I. Disperse Orange 1, 2, 3, 3:3, 4, 5, 6, 7, 8, 9, 10, 11, 12, 13, 14, 15, 16, 17, 18, 19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147 und 148;
- C.I. Disperse Red 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86:1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 211, 223, 224, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328, 329, 330, 331, 332, 333, 334, 335, 336, 338, 339, 340, 341, 342, 343, 344, 346, 347, 348, 349, 352, 356 und 367;
- C.I. Disperse Violet 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 70, 81, 86, 87, 88, 89, 91, 92, 93, 94, 96 und 97;
- C.I. Disperse Blue 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 195, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 349, 351 und 359;
- C.I. Disperse Green 1, 2, 5, 6 und 9;
- C.I. Disperse Brown 1, 2, 3, 4, 4:1, 5, 7, 8, 9, 10, 11, 18, 19, 20 und 21;
- C.I. Disperse Black 1, 3, 4, 5, 6, 7, 8, 9, 10, 11, 12, 13, 14, 15, 20, 22, 24, 25, 26, 27, 28, 29, 29:1, 30, 31, 32, 33, 34 und 36;
- C.I. Solvent Yellow 2, 3, 7, 12, 13, 14, 16, 18, 19, 21, 25, 25:1, 27, 28, 29, 30, 33, 34, 36, 42, 43, 44, 47, 56, 62, 72, 73, 77, 79, 81, 82, 83, 83:1, 88, 89, 90, 93, 94, 96, 98, 104, 107, 114, 116, 117, 124, 130, 131, 133, 135, 141, 143, 144, 145, 146, 157, 160:1, 161, 162, 163, 167, 169, 172, 173, 176, 179, 180, 181, 182, 183, 184, 185, 186, 187, 189, 190 und 191;
- C.I. Solvent Orange 1, 2, 3, 4, 5, 7, 11, 14, 20, 23, 25, 31A, 40:1, 41, 45, 54, 56, 58, 60, 62, 63, 70, 75, 77, 80, 81, 86, 99, 102, 103, 105, 106, 107, 108, 109, 110, 111, 112 und 113;
- C.I. Solvent Red 1, 2, 3, 4, 8, 16, 17, 18, 19, 23, 24, 25, 26, 27, 30, 33, 35, 41, 42, 45, 48, 49, 52, 68, 69, 72, 73, 83:1, 84:1, 89, 90, 90:1, 91, 92, 106, 109, 111, 118, 119, 122, 124, 125, 127, 130, 132, 135, 141, 143, 145, 146, 149, 150, 151, 155, 160, 161, 164, 164:1, 165, 166, 168, 169, 172, 175, 179, 180, 181, 182, 195, 196, 197, 198, 207, 208, 210, 212, 214, 215, 218, 222, 223, 225, 227, 229, 230, 233, 234, 235, 236, 238, 239, 240, 241, 242, 243, 244, 245, 247 und 248;
- C.I. Solvent Violet 2, 8, 9, 11, 13, 14, 21, 21:1, 26, 31, 36, 37, 38, 45, 46, 47, 48, 49, 50, 51, 55, 56, 57, 58, 59, 60 und 61;
- C.I. Solvent Blue 2, 3, 4, 5, 7, 18, 25, 26, 35, 36, 37, 38, 43, 44, 45, 48, 51, 58, 59, 59:1, 63, 64, 67, 68, 69, 70, 78, 79, 83, 94, 97, 98, 99, 100, 101, 102, 104, 105, 111, 112, 122, 124, 128, 129, 132, 136, 137, 138, 139 und 143;
- C.I. Solvent Green 1, 3, 4, 5, 7, 28, 29, 32, 33, 34 und 35;
- C.I. Solvent Brown 1, 3, 4, 5, 12, 20, 22, 28, 38, 41, 42, 43, 44, 52, 53, 59, 60, 61, 62 und 63;
- C.I. Solvent Black 3, 5, 5:2, 7, 13, 22, 22:1, 26, 27, 28, 29, 34, 35, 43, 45, 46, 48, 49 und 50.

Darüber hinaus eignen sich die an sich bekannten substituierten Benzodifuranonfarbstoffe, deren Grundkörper der Formel A entspricht.

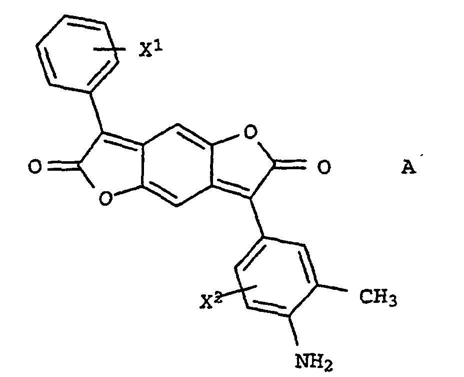

Solche Farbstoffe können an einem oder beiden Phenylringen substituiert sein. Als Substituenten X¹ und X² kommen Halogen, Alkyl, das gegebenenfalls durch nicht benachbarte Sauerstoffatome unterbrochen ist, Alkoxy, dessen Alkylrest durch Sauerstoffatome unterbrochen sein kann und darüber hinaus substituiert sein kann, Hydroxy, gegebenenfalls substituiertes Amino, Cyano, Nitro und Alkoxycarbonyl in Betracht.

Ferner sind Farbstoffe der folgenden Formeln B bis E geeignet:

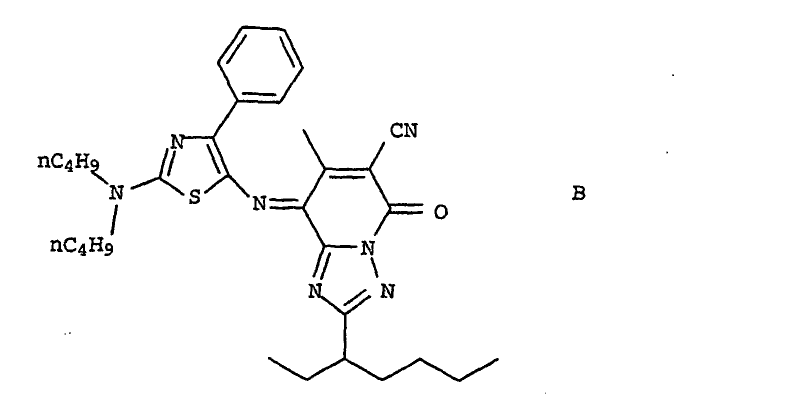

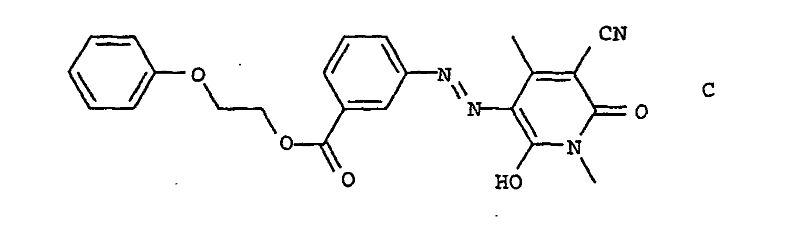

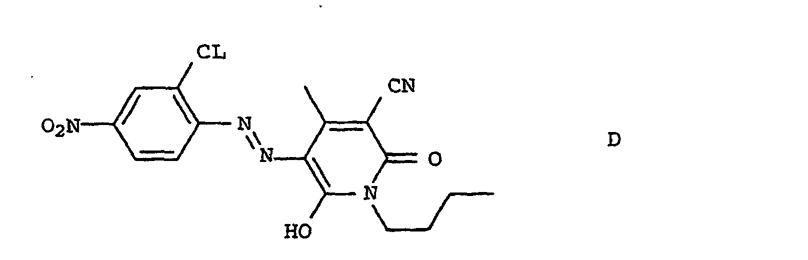

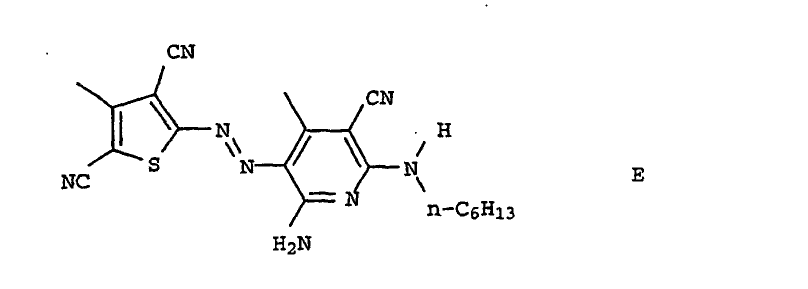

Weitere Beispiele für unlösliche Farbstoffe a1) sind in den WO 97/46623, WO 98/24850 und WO 99/29783 aufgeführt.

Das ungelöste, dispergierte Farbmittel a1) sollte möglichst feinteilig sein. Bevorzugt haben 95 Gew.-%, besonders bevorzugt 99 Gew.-%, der Farbmittelteilchen a1) einen mittleren Teilchendurchmesser 1 µm, vorzugsweise 0,5 µm.

Als Farbstoffe a2), die im Wasser/Lösungsmittel-Gemisch löslich sind, eignen sich insbesondere Arylmethan-, Azo-, Methin-, Rhodamin- und Metallkomplexfarbstoffe, die saure bzw. ionische Gruppen enthalten.

Beispiele für geeignete Farbstoffe a2) sind im einzelnen:
- C.I. Basic Yellow 2, 37, 78, 94, 96, 97, 98, 102 und 111;
- C.I. Basic Orange 2, 60, 62 und 63;
- C.I. Basic Red 1, 14, 49, 108 und 111;
- C.I. Basic Violet 1, 3, 4, 10, 11, 49 und 50;
- C.I. Basic Blue 26, 152, 157, 158 und 161;
- C.I. Basic Green 1 und 4;
- C.I. Basic Brown 1;
- C.I. Acid Orange 7 und 8;
- C.I. Acid Blue 9;
- C.I. Direct Yellow 4, 5, 11, 15, 127, 131 und 147;
- C.I. Direct Red 239 und 254;
- C.I. Direct Blue 161, 199, 279 und 281;
- C.I. Reactive Red 120.

Die erfindungsgemäßen Farbmittelzubereitungen enthalten in der Regel 0,01 bis 20 Gew.-%, bevorzugt 0,2 bis 10 Gew.-%, besonders bevorzugt 1 bis 6 Gew.-%, Farbmittel a), wobei für Farbmittel a1) Mengen im Bereich von 1 bis 6 Gew.-% und für Farbmittel a2) Mengen im Bereich von 1 bis 10 Gew.-% besonders geeignet sind.

Wasser stellt den Hauptbestandteil b) der erfindungsgemäßen Farbmittelzubereitungen dar, wobei vollentsalztes Wasser, wie es beispielsweise durch die Verwendung eines Ionenaustauschers erhältlich ist, bevorzugt ist. Sein Gehalt beträgt üblicherweise 50 bis 95 Gew.-%. Für die erfindungsgemäßen Zubereitungen ist dabei ein Wassergehalt von 60 bis 80 Gew.-% bevorzugt. Für bindemittelfreie Zubereitungen ist dabei ein Wassergehalt von 60 bis 80 Gew.-% bevorzugt, in bindemittelhaltigen Zubereitungen beträgt der Wassergehalt vorzugsweise 50 bis 75 Gew.-%.

Basieren die erfindungsgemäßen Farbmittelzubereitungen auf ungelösten Farbmitteln a1), dann weisen sie einen Gehalt von in der Regel 0,1 bis 25 Gew.-%, bevorzugt von 0,5 bis 10 Gew.-%, an Dispergiermittel c) auf mindestens ein Dispergiermittel c) auf. Im Fall von gelösten Farbmitteln a2), wird üblicherweise auf die Komponente c) verzichtet.

Als Dispergiermittel c) eignen sich im Prinzip alle für wässrige Systeme bekannten Dispergiermittel.

Besonders geeignet sind wasserlösliche Dispergiermittel auf der Basis eines oder mehrerer wasserlöslicher oxalkylierter Phenole C 1, eines oder mehrerer Arylsulfonsäure-Formaldehyd-Kondensationsprodukte C 2, eines oder mehrerer Kondensationsprodukte eines mindestens difunktionellen Isocyanats mit jeweils eine isocyanatreaktive Gruppen tragenden Verbindungen C 3 oder eines oder mehrerer alkoxylierter Hydroxynaphthaline C 4.

Als Dispergiermittel C 1 sind oxalkylierte Phenole der Formel C 1a 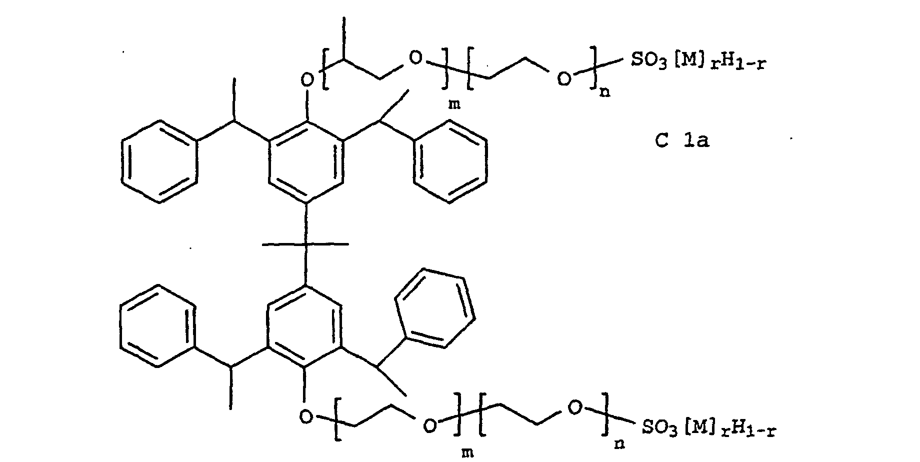 oder C 1b 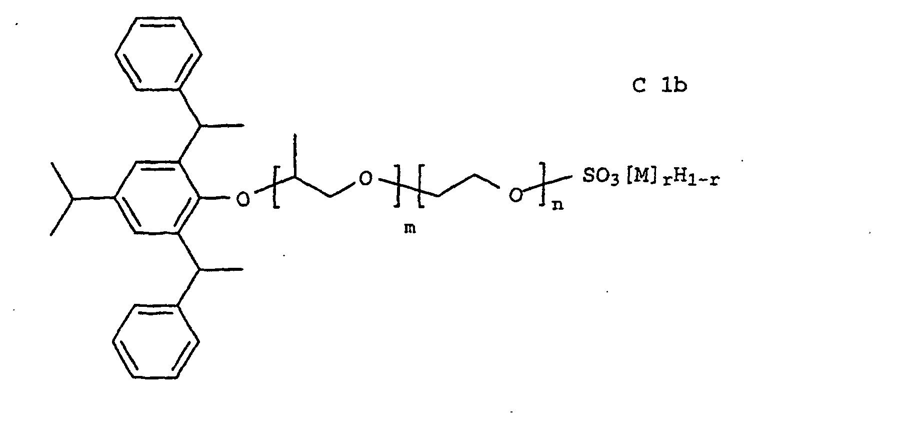 oder deren Mischungen geeignet, in denen die Variablen wie folgt definiert sind:
m liegt zwischen 0 und 180, bevorzugt zwischen 0 und 125
n liegt zwischen 10 und 180, bevorzugt ist n mindestens 25 und besonders bevorzugt mindestens 37, wobei n ≥ m ist;
M ist ein Alkalimetall, bevorzugt Na oder K und besonders bevorzugt Na;
r ist 0 oder 1.

Die Herstellung der Verbindungen C 1a und C 1b erfolgt vorteilhaft durch Umsetzung der Phenole C 1a.1 oder C 1a.2 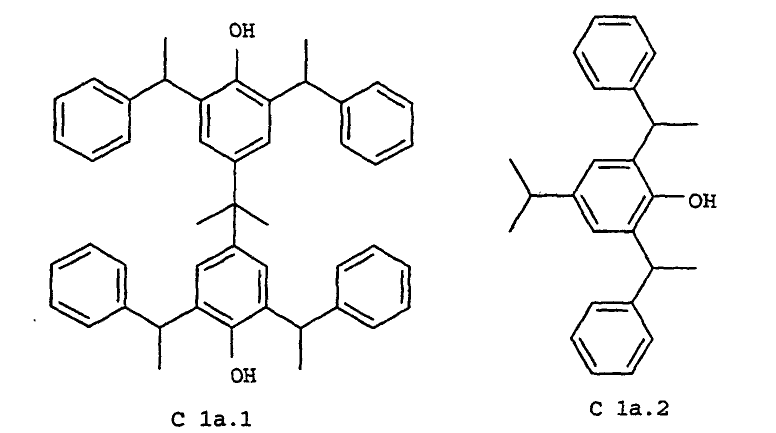 mit Propylenoxid und folgender Umsetzung des Adduktes mit Ethylenoxid oder durch Umsetzen von C 1a.1 oder C 1a.2 mit Ethylenoxid erhalten. Anschließend kann man die Addukte mit Chlorsulfonsäure oder Schwefeltrioxid vollständig oder partiell zu Schwefelsäurehalbester umsetzen und die erhaltenen Halbester mit alkalisch wirkenden Mitteln neutralisieren.

Die Phenole der Formel C 1a.1 und C 1a.2 können durch Umsetzen von Bisphenol A (2.2-(p,p'-Bishydroxydiphenyl)propan) oder Phenol mit 4 bzw. 2 mol Styrol in Gegenwart von Säure als Katalysator erhalten werden. Dabei werden die Phenole C 1a.1 und C 1a.2 nach bekannten Verfahren zuerst mit Propylenoxid und anschließend mit Ethylenoxid oder nur mit Ethylenoxid in Gegenwart von sauer oder alkalisch wirkenden Katalysatoren, beispielsweise mit NaOCH₃ oder mit SbCl₅, zu den entsprechenden Oxalkylierungsprodukten C 1a bzw. C 1b mit r = 0 umgesetzt. Die Oxalkylierung kann z.B. nach dem in der US 2,979,528 beschriebenen Verfahren erfolgen.

Die Schwefelsäurehalbester werden durch Reaktion der Oxalkylierungsprodukte mit Chlorsulfonsäure oder Schwefeltrioxid hergestellt, wobei die Menge an Chlorsulfonsäure oder Schwefeltrioxid so gewählt wird, dass alle freien Hydroxylgruppen oder nur ein gewisser Prozentsatz sulfatiert wird. Im letzteren Falle entstehen Gemische aus Verbindungen der Formel C 1a bzw. C 1b, die freie und sulfatierte Hydroxylgruppen enthalten. Zur Verwendung als Dispergiermittel werden die bei der Umsetzung erhaltenen Halbester der Schwefelsäure in wasserlösliche Salze überführt. Als solche kommen vorteilhaft die Alkalimetallsalze, z.B. die Natrium- oder Kaliumsalze, in Betracht. Dabei sind im Falle von Chlorsulfonsäure zwei Äquivalente, bei Schwefeltrioxid ein Äquivalent basisch wirkender Verbindungen erforderlich. Als letztere verwendet man zweckmäßigerweise wässriges Alkalimetallhydroxid. Bei der Neutralisation sollte die Temperatur 70°C nicht überschreiten. Die erhaltenen Salze können in Form von wässrigen Lösungen oder auch als solche isoliert und in fester Form verwendet werden.

Bevorzugt sind Dispergiermittel C 1, bei denen m 0 bis im Mittel 2,5, n im Mittel 37 bis 250 und r 0 bis im Mittel 0,5 ist. Besonders bevorzugt sind Dispergiermittel C 1, bei denen a 0 bis im Mittel 2,5, b im Mittel 50 bis 100 und d im Mittel 0,5 ist.

Die Dispergiermittel C1 sind bekannt und z.B. in der US 4,218,218 beschrieben.

Die Dispergiermittel C 2 sind durch Sulfonieren aromatischer Verbindungen wie Naphthalin selbst oder Naphthalin enthaltender Gemische und anschließendes Kondensieren der gebildeten Arylsulfonsäuren mit Formaldehyd erhältlich.

Als Ausgangsprodukt für die Herstellung der Arylsulfonsäuren wurde bevorzugt das in Tabelle 1 charakterisierte Gemisch aromatischer Verbindungen verwendet, das durch thermische Spaltung eines naphthenischen Rückstandsöls bei einer Temperatur von 1400 bis 1700°C und Fraktionieren der Spaltprodukte (Fraktion bei 1013 mbar, 100-120°C übergehend) erhalten wurde. Diese naphthenischen Rückstandsöle fallen beim Cracken von Leichtbenzin an und werden auch als hochsiedende aromatische Kohlenwasserstofföle bezeichnet.

Diese Aromatenfraktion besteht aus einer Mischung vieler aromatischer Substanzen, deren Struktur und Menge praktisch nicht im einzelnen ermittelt werden kann. Folgende Arylverbindungen sind die wichtigsten Vertreter dieser Aromatenfraktion:

**Tabelle 1**

| | Gew.-% in der Aromatenfraktion |
|---|---|
| Naphthalin | 30 - 55 |
| 2-Methylnaphthalin | 5 - 15 |
| 1-Methylnaphthalin | 4 - 10 |
| Inden | 3 - 10 |
| Diphenyl | 1 - 5 |
| Methylinden | 1 - 5 |
| Acenaphthen | 1 - 4 |

Die Aromatenfraktion enthält außerdem an identifizierten Bestandteilen in Mengen von 0,1 bis etwa 2 Gew.-% folgende aromatische Verbindungen: Fluoren, Indan, α-Methylstyrol, Phenanthren, Methylindan, Dimethylnaphthalin, Ethylnaphthalin, Xylole, Tetralin, Styrol, Methylethylbenzol, Anthracen, Fluoranthren, Pyren und Toluol.

Die Herstellung des Dispergiermittels C 2 kann in Gegenwart von aromatischen oder langkettigen aliphatischen Carbonsäuren, deren Salzen, Anhydriden oder Mischungen dieser Verbindungen vorgenommen werden.

Beispiele für geeignete aromatische Carbonsäuren oder deren Derivate sind Naphthalincarbonsäure, Phthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride wie Trimellitsäureanhydrid, Benzol-1,2,4,5-tetracarbonsäuredianhydrid oder Phthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen, natürlichen oder synthetischen Ursprungs, beispielsweise höhere Fettsäuren wie Laurinsäure, Myristinsäure, Palmitinsäure, Stearinsäure, Ölsäure, Linolsäure oder Linolensäure oder synthetisch hergestellte Carbonsäuren wie 2-Ethylhexansäure, Isononansäure oder Isotridecansäure.

Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen wie Ethanolamin, Diethanolamin oder Triethanolamin erhältlich sind.

Bevorzugt sind Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure.

Als Dispergiermittel C 2 eignen sich in diesem Fall vor allem solche Gemische, die 50 bis 97 Gew.-%, insbesondere 70 bis 95 Gew.-%, Arylsulfonsäure-Formaldehyd-Kondensationsprodukte und 3 bis 50 Gew.-%, insbesondere 5 bis 30 Gew.-%, aromatische oder langkettige aliphatische Carbonsäuren, deren Salze oder Anhydride oder Mischungen davon enthalten.

Diese Gemische werden im ersten durch Umsetzung mit konzentrierter Schwefelsäure oder mit Oleum mit einem SO₃-Gehalt von 10 bis 65 Gew.-% Schritt sulfoniert, und zwar bei Temperaturen von 120-160°C, bevorzugt bei 135-145°C. Pro Gewichtsteil der Aromaten werden vorteilhaft 0,7 bis 1,5 Gewichtsteile Oleum mit 65 Gew.-% SO₃ eingesetzt oder eine entsprechende Menge Oleum mit geringerem SO₃-Gehalt. Die Reaktionsdauer beträgt bei 145°C üblicherweise von 1,5 bis 3 Stunden, bei 140°C von 2¼ bis 4 Stunden und bei 135°C von 3¼ bis 6 Stunden.

Nach der Sulfonierung enthalten die Arylsulfonsäuregemische mindestens 50 Gew.-% eines Gemisches von α- und β-Naphthalinsulfonsäuren, wobei das Verhältnis der α- zu den β-Isomeren üblicherweise 20:1 bis 1:8, insbesondere 10:1 bis 1:5 beträgt und ganz besonders bevorzugt 1:1 bis 1:2 beträgt.

Anschließend werden die sulfonierten Produkte mit Formaldehyd kondensiert. Dies erfolgt im Allgemeinen dadurch, dass man die Reaktionsmischung der Sulfonierungsreaktion mit Wasser verdünnt und anschließend Formaldehyd zufügt, vorzugsweise in Form der 10 bis 50 Gew.-% wässrigen Lösung. Die so entstanden Mischung hält man über einen Zeitraum von 4 bis 12, bevorzugt 7 bis 9 Stunden bei einer Temperatur von 90 bis 105°C. Wenn man bei erhöhtem Druck arbeitet, beispielsweise von 1,1 bis 10 bar, so kann man auch bei Reaktionstemperaturen von 105 bis 150°C arbeiten. Üblicherweise setzt man 0,05 bis 0,2, bevorzugt 0,07 bis 0,17 Gewichtsteile Formaldehyd ein, bezogen auf Sulfonierungsprodukte.

Nach Beendigung wird die Reaktionsmischung üblicherweise neutralisiert, beispielsweise mit Natriumhydroxid, Kaliumhydroxid, Calziumhydroxid, Natriumcarbonat Kaliumcarbonat oder Natriumbicarbonat, in Form der wässrigen Lösungen, bis der pH-Wert zwischen 6 und 11 liegt.

Die Kondensationsprodukte weisen bei Verwendung der o.g. Aromatenfraktion einen Sulfonsäuregruppengehalt von maximal 40 Gew.-% auf. Aufgrund des Herstellungsprozesses können in den Kondensationsprodukten noch bis zu 10 Gew.-% Na₂SO₄ und bis zu 25 mol-% Schwefelsäure, bezogen auf Sulfonsäuregruppen, enthalten sein.

Die Dispergiermittel C 2 und ihre Herstellung sind bekannt und z.B. in der US 5,186,846, der DE-A-11 37 005 oder der EP-A 0 380 778 beschrieben.

Die Dispergiermittel C 3 sind Kondensationsprodukte von mindestens difunktionellen Isocyanaten, die als Verknüpfungsstelle dienen, mit einer polymeren Verbindung, die an einem Kettenende mit einer isocyanatreaktiven Gruppe terminiert ist und die zu dispergierenden Feststoffteilchen mit dem Dispersionsmedium verträglich macht (im folgenden "Stabilisatorblock" genannt), und einem (Homo- oder Co-)Polymer eines stickstoffhaltigen Monomers oder einem Phosphonsäureester, die jeweils über eine isocycanatreaktive Gruppe verfügen und sich an die zu dispergierenden Feststoffteilchen anlagern (im folgenden "Ankergruppenblock" genannt).

Das die Verknüpfung von Stabilisatorblock und Ankergruppenblock bewirkende Isocyanat ist ein Diisocyanat oder ein hoher funktionelles Polyisocyanat mit einer mittleren NCO-Funktionalität von 2,0 bis 4,5.

Die Diisocyanate können aromatisch oder aliphatisch sein, bevorzugt sind aliphatische Diisocyanate wie Tetramethylendiisocyanat, Hexamethylendiisocyanat, Octamethylendiisocyanat, Decamethylendiisocyanat, Dodecamethylendiisocyanat, Tetradecamethylendiisocyanat, Trimethylhexandiisocyanat, Tetramethylhexandiisocyanat, 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan(isophorondiisocyanat) und 2,4- und 2,6-Diisocyanato-1-methylcyclohexan, wobei Hexamethylendiisocyanat und Isophorondiisocyanat besonders bevorzugt sind.

Die höher funktionellen Polyisocyanate können ebenfalls aromatisch oder aliphatisch sein. Auch hier sind die aliphatischen Polyisocyanate bevorzugt, vor allem solche mit einer mittleren NCO-Funktionalität von 1,7 bis 5, insbesondere etwa 3. Beispielhaft seien folgende Gruppen genannt:
(a) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei diesen Isocyanuraten handelt es sich insbesondere um einfache Tris-isocyanatoalkyl- bzw. Triisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-%, und eine mittlere NCO-Funktionalität von 2,6 bis 4,5.
(b) Uretdiondiisocyanate mit aliphatisch und/oder cycloaliphatisch gebundenen Isocyanatgruppen, die sich vorzugsweise von Hexamethylendiisocyanat oder Isophorondiisocyanat ableiten. Bei Uretdiondiisocyanaten handelt es sich um cyclische Dimerisierungsprodukte von Diisocyanaten.
(c) Biuretgruppen aufweisende Polyisocyanate mit aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate haben im allgemeinen einen NCO-Gehalt von 18 bis 25 Gew.-% und eine mittlere NCO-Funktionalität von 3 bis 4,5.
(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen, wie Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
(e) Oxadiazintriongruppen enthaltende Polyisocyanate, vorzugsweise von Hexamethylendiisocyanat oder Isophorondiisocyanat abgeleitet. Solche Oxadiazintriongruppen enthaltende Polyisocyanate sind aus Diisocyanat und Kohlendioxid herstellbar.
(f) Uretonimin-modifizierte Polyisocyanate.

Bei der den Stabilisatorblock bildenden polymeren Verbindung handelt es sich vorzugsweise um eine polymere Verbindung der allgemeinen Formel C 3a

R⁵-Yₓ-XH C 3a

worin
- R⁵: für Wasserstoff,
C₁-C₂₈-Alkyl, bevorzugt C₁-C₁₀-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl und n-Decyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.
C₂-C₂₈-Alkenyl mit einer oder mehreren Doppelbindungen, substituiert oder unsubstituiert, beispielsweise Vinyl, 1-Allyl, 3-Allyl, ω-Butenyl, ω-Pentenyl, ω-Hexenyl, ω-Decenyl, ω-Undecenyl, ω-Eicosenyl, 1-cis-Buta-1,3-dienyl oder 1-cis-Hexa-1,5-dienyl. Unter den substituierten C₂-C₂₈-Alkenylgruppen seien beispielhaft genannt: Isopropenyl, 1-Isoprenyl, α-Styryl, β-Styryl, 1-cis-1,2-Phenylethenyl oder 1-trans-1,2-Phenylethenyl.
C₂-C₂₈-Alkinyl mit einer oder mehreren Dreifachbindungen, substituiert oder unsubstituiert und optional mit Doppelbindungen, beispielsweise Ethinyl, Propargyl, ω-Butinyl, But-2-inyl, ω-Pentinyl, Pent-2-inyl, Pent-3-inyl, 2-Methylpent-3-inyl, ω-Hexinyl, ω-Decinyl, ω-Undecinyl, ω-Eicosinyl.
oder den Rest eines Polymerisationsinitiators oder eines Kettenreglers steht,
- Y: für gleiche oder verschiedene einpolymerisierte Einheiten von Monomeren, ausgewählt unter α,β-ethylenisch ungesättigten Mono- oder Dicarbonsäuren, gegebenenfalls mit Hydroxy, C₁-C₆-Alkoxy, Polyalkylenoxy oder Halogen ein- oder mehrfach substituierten C₁-C₂₀-(Cyclo)alkyl- oder C₇-C₂₀-Aralkylestern, Amiden, Nitrilen oder Anhydriden von α,β-ethylenisch ungesättigten Mono- oder Dicarbonsäuren, Vinyl- oder Allylestern aliphatischer oder aromatischer Carbonsäuren, Vinyl- oder Allylethern, ethylenisch ungesättigten Sulfonsäuren oder Sulfonsäurederivaten, gegebenenfalls halogenierten ethylenisch ungesättigten aliphatischen C₂-C₂₀-Kohlenwasserstoffen, aromatischen ethylenisch ungesättigten Verbindungen oder zu Polyphosphacenen polymerisierbaren Verbindungen, oder für 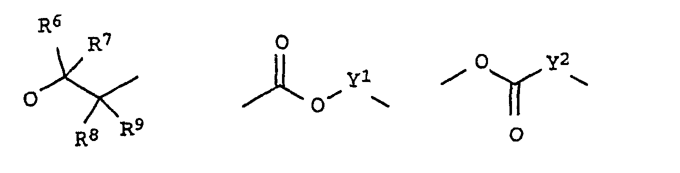 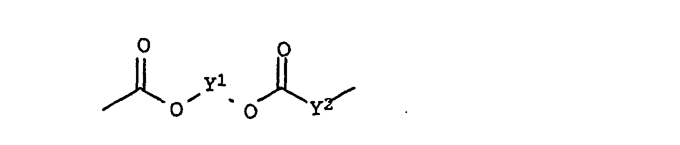
steht, wobei
R⁶, bis R⁹ unabhängig voneinander für
Wasserstoff,
C₁-C₆-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.
C₆-C₂₀-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl. -CH₂-C₁ oder -CH₂-OH stehen,
und Y¹, Y² unabhängig voneinander für eine C₂-C₂₀-Alkylen-, C₆-C₁₄-Arylen wie beispielsweise p-Phenylen oder m-Phenylen oder Aralkylengruppe stehen,
- x: für eine ganze Zahl zwischen 0 und 10000 steht, wobei x vorzugsweise 3 2, insbesondere 3 3 und besonders bevorzugt 30 bis 1000 ist, und
- X: für COO, O, S oder NR¹⁰ steht, worin R¹⁰ für H oder eine C₁-C₆-Alkylgruppe steht, die wie oben stehend definiert ist.

Bevorzugt werden zum Aufbau der polymeren Verbindung C 3a C₁-C₈-Alkyl(meth)acrylate eingesetzt. Besonders bevorzugt werden ein oder mehrere C₁-C₄-Alkylmethacrylate, insbesondere Methylmethacrylat und/oder Butylmethacrylat, polymerisiert. Bei der isocyanatreaktiven Gruppe XH handelt es sich vorzugsweise um eine Hydroxylgruppe, die mit Hilfe von Initiatoren, die beim Zerfall ein Hydroxyradikal liefern, und/oder mit Hilfe von Kettenreglern, die eine Hydroxylgruppe enthalten, terminal in das Polyacrylat eingeführt werden kann.

Ganz besonders bevorzugt als polymere Verbindung C 3a sind Mono- (in der Regel C₁-C₁₈-, bevorzugt C₁-C₄-)alkylether von Poly- (insbesondere C₂-C₄-)alkylenglykolen, die z.B. durch Umsetzung eines Alkanols mit Alkenoxiden, wie Ethylenoxid, Propylenoxid und Butylenoxid, oder Epichlorhydrin erhalten werden können. Besonders geeignet sind mit 5 bis 10000, vorzugsweise 5 bis 80 mol Ethylenoxid und/oder Propylenoxid alkoxylierte C₁-C₁₈- (insbesondere C₁-C₄-)Alkanole, wobei Polyethylenglykolmonomethylether ganz besonders geeignet sind.

Das gewichtsmittlere Molekulargewicht des Stabilisatorblocks beträgt vorzugsweise etwa 250 bis 100000, insbesondere etwa 500 bis 7000.

Eine zum Aufbau des Dispergiermittels c3) geeignete Ausführungsform des Ankergruppenblocks basiert auf Homo- oder Copolymerisaten eines oder mehrerer Monomerer aus der Gruppe der N-Vinylamide, N-Vinyllactame und vinyl- oder allylsubstituierten stickstoffhaltigen Heterocyclen. Beispiele für besonders geeignete Monomere sind N-Vinylpyrrolidon, N-Vinylpyridin, N-Vinylcaprolactam, N-Vinylimidazol und N-Vinylformamid, wobei N-Vinylpyrrolidon bevorzugt ist. Vorzugsweise weist das Homo- oder Copolymer einen K-Wert von 10 bis 100, insbesondere 10 bis 30, auf. Die Terminierung durch eine Hydroxylgruppe als isocyanatreaktive Gruppe kann durch Durchführung der Polymerisation in Wasser oder einem niederen Alkohol wie Isopropanol oder durch Polymerisation in Gegenwart eines entsprechenden Kettenreglers und/oder Initiators erreicht werden.

Eine weitere zum Aufbau des Dispergiermittels c3) geeignete Ausführungsform des Ankergruppenblocks bilden Phosphonsäureester der allgemeinen Formel C 3b 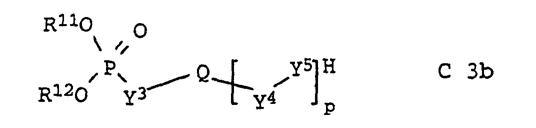 in denen
- R¹¹ und R¹²: unabhängig voneinander für C₁-C₄-Alkyl wie Methyl, Ethyl, n-Propyl, iso-Propyl, n-Butyl, iso-Butyl, sec.-Butyl und tert.-Butyl stehen, insbesondere R¹¹ = R¹² für Methyl oder Ethyl stehen;
- Q: für NR₍₂₋ₚ₎ oder CR₍₃₋ₚ₎ steht (R = H oder C₁-C₈-Alkyl);
- Y³ und Y⁴: unabhängig voneinander für eine chemische Bindung oder für optional mit C₁-C₈-Alkyl oder Aryl substituiertes C₁-C₁₀-Alkylen stehen, das durch ein oder mehrere O, NR, CO, COO, OCO, CONR oder NRCO unterbrochen sein kann;
- p: für 1 oder 2 steht; und
- Y⁵: für COO, O, S oder NR¹³ steht, wobei R¹³ für H oder eine C₁-C₆-Alkylgruppe steht, die wie oben stehend definiert ist.

Bevorzugte Beispiele für diese Phosphonsäureester sind N,N-Bis(hydroxyethyl)aminomethylphosphonsäurediethylester, Dimethylund Diethylester von 3-Hydroxymethylamino-3-oxopropylphosphonsäure, 3-Aminopropylphosphonsäure, 1-Aminopropylphosphonsäure, 2-Aminooctylphosphonsäure, 1-Aminooctylphosphonsäure, 1-Aminobutylphosphonsäure, Hydroxymethylphosphonsäure und 1-Hydroxyethylphosphonsäure.

Die Umsetzung des Di- oder Polyisocyanats mit dem Stabilisatorblock und dem Ankergruppenblock kann zweistufig oder in einer Eintopfreaktion erfolgen. Vorzugsweise erfolgt die Umsetzung jedoch zweistufig, wobei in einer ersten Stufe das Di- oder Polyisocyanat mit dem Stabilisatorblock umgesetzt wird. Die Umsetzung kann in Substanz oder in einem Lösungsmittel erfolgen, wobei die Umsetzung in einem Lösungsmittel, wie Aceton, THF, Toluol, Dioxan, bevorzugt ist. Wenn der Stabilisatorblock durch Polymerisation einer ethylenisch ungesättigten Verbindung hergestellt worden ist, kann die Umsetzung des Stabilisatorblocks mit dem Dioder Polyisocyanat vorteilhaft im gleichen Lösungsmittel wie die radikalische Polymerisation durchgeführt werden. Die Reaktion kann ohne Katalysator oder bevorzugt in Anwesenheit eines Katalysators, wie eines tertiären Amins, insbesondere Triethylamin, oder eines Metallsalzes, insbesondere Zinnoctoat oder Bleioctoat, oder einer metallorganischen Verbindung, wie Dibutylzinndilaurat oder Titantetramethylat, durchgeführt werden. Die Umsetzung wird im allgemeinen bei einer Temperatur von Raumtemperatur bis 125°C, insbesondere 40 bis 90°C, durchgeführt.

Weitere Einzelheiten zu den Dispergiermitteln C 3 sind in der DE-A-198 429 52 beschrieben.

Bei den Dispergiermitteln C 4 handelt es sich um alkoxylierte Hydroxynaphthaline, wobei ethoxylierte β-Hydroxynaphthaline bevorzugt sind. Die Dispergiermittel c4) weisen in der Regel ein mittleres Molekulargewicht M_{w} von 2000 bis 40000 g/mol, insbesondere 20000 bis 35000 g/mol, vor allem 25000 bis 30000 g/mol auf.

Die Dispergiermittel C 4 sind allgemein bekannt und auf übliche Weise durch Alkoxylierung von Hydroxynaphthalin zugänglich.

Weiterhin enthalten die erfindungsgemäßen Farbmittelzubereitungen mindestens eine Verbindung der allgemeinen Formel I 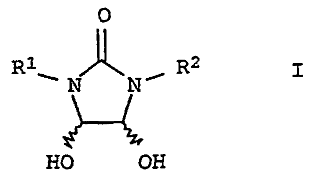 wobei in Formel I die Variablen wie folgt definiert sind:
- R¹, R²: unabhängig voneinander ausgewählt aus
Wasserstoff,
C₁-C₄-Alkyl, beispielsweise Methyl, Ethyl, n-Propyl, iso-Propyl, n-Butyl, iso-Butyl, sec.-Butyl und tert.-Butyl; CH₂-O-R³, wobei
- R³: Wasserstoff oder C₁-C₄-Alkyl bedeutet, ausgewählt aus Methyl, Ethyl, n-Propyl, iso-Propyl, n-Butyl, iso-Butyl, sec.-Butyl und tert.-Butyl.

Bevorzugt sind R¹ und R² jeweils gleich. Ganz besonders bevorzugt sind R¹ und R² gleich und gewählt aus Wasserstoff oder Methyl oder CH₂OH.

Beispielhafte Vertreter der Verbindungen der allgemeinen Formel I sind wie folgt erhältlich:

### Verbindung I a

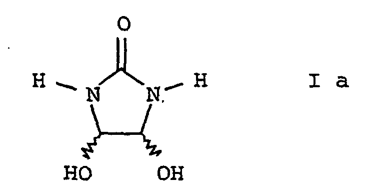

lässt sich vorteilhaft auf bekannte Weise durch Kondensation von Glyoxal mit einem Äquivalent Harnstoff in Gegenwart von Alkali herstellen, wie beispielsweise in R. Wegler et al., Methoden Org. Chem. (Houben-Weyl), Band 14/2, S. 341, Thieme Verlag Stuttgart, 1963 und darin zitierter Literatur berichtet.

### Verbindung I b

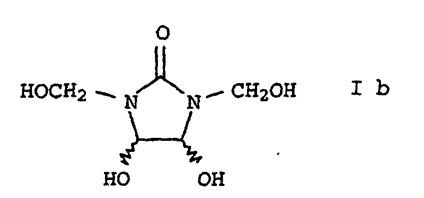

lässt sich beispielsweise erhalten, wenn man unter analogen Bedingungen 2 oder mehr Äquivalente Formaldehyd zugibt. Alternativ lässt sich Verbindung I b erhalten, indem man Glyoxal bei pH 5,5 mit Formaldehyd und Harnstoff nach einer Vorschrift aus GB 1,273,517 umsetzt.

### Verbindung I c

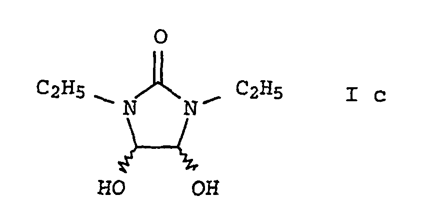

und andere symmetrische und nicht symmetrische Derivate lassen sich nach einer Vorschrift aus Russ. Chem. Bull. 1998, 47, 1561 und der darin zitierten Literatur erhalten.

Die Verbindungen der allgemeinen Formel I fallen üblicherweise als Isomerengemisch von cis- und trans-Diolen an. Für die vorliegende Erfindung können reines cis-Diol, reines trans-Diol und auch Isomerengemische verwendet werden.

Die Verbindungen der allgemeinen Formel I setzt man üblicherweise in Mengen von 0,1 bis 20 Gew.-%, bezogen auf die Farbmittelzubereitung, zu.

Als weitere Komponente können die erfindungsgemäßen Farbmittelzubereitungen organische Lösungsmittel als Zusatz enthalten. Niedermolekulares Polytetrahydrofuran ist ein bevorzugter Zusatz, es kann allein oder vorzugsweise im Gemisch mit einem oder mehreren schwer verdampfbaren, in Wasser löslichen oder mit Wasser mischbaren organischen Lösungsmitteln eingesetzt werden.

Das bevorzugt verwendete Polytetrahydrofuran hat üblicherweise ein mittleres Molekulargewicht M_{w} von 150 bis 500 g/mol, bevorzugt von 200 bis 300 g/mol und besonders bevorzugt von etwa 250 g/mol (entsprechend einer Molekulargewichtsverteilung von 225 bis 275 g/mol; Poly-THF 250, BASF).

Polytetrahydrofuran kann auf bekannte Weise über kationische Polymerisation von Tetrahydrofuran hergestellt werden. Dabei entstehen lineare Polytetramethylenglykole.

Wenn Polytetrahydrofuran im Gemisch mit weiteren organischen Lösungsmitteln vorliegt, werden hierfür im Allgemeinen schwer verdampfbare (d.h. in der Regel einen Siedepunkt > 100°C aufweisende) und damit eine wasserrückhaltende Wirkung besitzende organische Lösungsmittel eingesetzt, die in Wasser löslich oder mit Wasser mischbar sind.

Als Lösungsmittel eignen sich weiterhin mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2- und 1,3-Propylenglykol, Glycerin, Erythrit, Pentaerythrit, Pentite wie Arabit, Adonit und Xylit und Hexite wie Sorbit, Mannit und Dulcit.

Weitere geeignete Lösungsmittel sind Polyethylen- und Polypropylenglykole, worunter auch die niederen Polymere (Di-, Tri- und Tetramere) verstanden werden sollen, und deren Mono- (vor allem C₁-C₆-, insbesondere C₁-C₄-)alkylether. Bevorzugt sind Polyethylen- und Polypropylenglykole mit mittleren Molekulargewichten von 100 bis 1500 g/mol, insbesondere von 200 bis 800 g/mol, vor allem von 300 bis 500 g/mol. Als Beispiele seien Di-, Tri- und Tetraethylenglykol, Diethylenglykolmonomethyl-, -ethyl-, -propyl- und -butylether, Triethylenglykolmonomethyl-, -ethyl-, -propyl- und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

Weiterhin als Lösungsmittel geeignet sind Pyrrolidon und N-Alkylpyrrolidone, deren Alkylkette vorzugsweise 1 bis 4, vor allem 1 bis 2, Kohlenstoffatome enthält. Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel sind 1,2- und 1,3-Propylenglykol, Glycerin, Sorbit, Diethylenglykol, Polyethylenglykol (M_{w} 300 bis 500 g/mol), Diethylenglykolmonobutylether, Triethylenglykolmonobutylether, Pyrrolidon, N-Methylpyrrolidon und N-(2-Hydroxyethyl)pyrrolidon.

Polytetrahydrofuran kann auch mit einem oder mehreren (z.B. zwei, drei oder vier) der oben aufgeführten Lösungsmitteln gemischt werden.

Die erfindungsgemäßen Farbmittelzubereitungen enthalten in der Regel 0,1 bis 40 Gew.-%, bevorzugt 5 bis 30 Gew.-%, besonders bevorzugt 10 bis 25 Gew.-%, und ganz besonders bevorzugt 10 bis 20 Gew.-%, Lösungsmittelkomponente.

Die Lösungsmittelkomponenten, insbesondere auch die genannten besonders bevorzugten Lösungsmittelkombinationen, kann vorteilhaft durch Harnstoff (in der Regel 0,5 bis 3 Gew.-%, bezogen auf das Gewicht der Farbmittelzubereitung) ergänzt werden, der die wasserrückhaltende Wirkung des Lösungsmittelgemisches noch verstärkt.

Die erfindungsgemäßen Farbmittelzubereitungen können weitere Hilfsmittel, wie sie insbesondere für wässrige Ink-Jet-Tinten und in der Druck- und Lackindustrie üblich sind, enthalten. Genannt seien z.B. Konservierungsmittel wie beispielsweise 1,2-Benzisothiazolin-3-on (kommerziell erhältlich als Proxel®-Marken der Fa. Avecia Lim.) und dessen Alkalimetallsalze, Glutardialdehyd und/oder Tetramethylolacetylendiharnstoff, Protectole®, Antioxidantien, Entgaser/Entschäumer wie beispielsweise Acetylendiole und ethoxylierte Acetylendiole, die üblicherweise 20 bis 40 mol Ethylenoxid pro mol Acetylendiol enthalten und gleichzeitig auch dispergierend wirken können, Mittel zur Regulierung der Viskosität, Verlaufshilfsmittel, Benetzer (z.B. benetzend wirkende Tenside auf der Basis von ethoxylierten oder propoxylierten Fett- oder Oxoalkoholen, Propylenoxid/Ethylenoxid-Blockcopolymeren, Ethoxylaten von Ölsäure oder Alkylphenolen, Alkylphenolethersulfaten, Alkylpolyglycosiden, Alkylphosphonaten, Alk-ylphenylphosphonaten, Alkylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel, Basen wie beispielsweise Triethanolamin oder Säuren, speziell Carbonsäuren wie beispielsweise Milchsäure oder Zitronensäure zur Regulierung des pH-Wertes. Wenn diese Mittel Bestandteil der erfindungsgemäßen Pigmentzubereitungen sind, beträgt ihre Gesamtmenge in der Regel 2 Gew.-%, insbesondere 1 Gew.-%, bezogen auf das Gewicht der Farbmittel Zubereitung.

Erfindungsgemäße bindemittelfreie Farbmittelzubereitungen weisen üblicherweise eine dynamische Viskosität von 1 bis 7 mm²/sec, vorzugsweisel bis 5 mm²/sec, insbesondere von 1 bis 3 mm²/sec, auf. Erfindungsgemäße bindemittelhaltige Farbmittelzubereitungen haben eine dynamische Viskosität von in der Regel 1 bis 25 mm²/sec, bevorzugt 1 bis 15 mm²/sec, vor allem von 1 bis 10 mm²/sec.

Die Oberflächenspannung der erfindungsgemäßen (bindemittelfreien oder bindemittelhaltigen) Farbmittelzubereitungen beträgt in der Regel 24 bis 70 mN/m, insbesondere 30 bis 60 mN/m.

Der pH-Wert der erfindungsgemäßen Farbmittelzubereitungen liegt im allgemeinen bei 5 bis 10, vorzugsweise bei 7 bis 9.

Bei der Herstellung der erfindungsgemäßen Farbmittelzubereitungen auf Basis von ungelöstem Farbmittel a1) geht man zweckmäßigerweise wie folgt vor:

Man mischt das Farbmittel a1), beispielsweise in Form eines wasserhaltigen Preßkuchens, zusammen mit dem Dispergiermittel c) in Gegenwart von Wasser und dispergiert in einer geeigneten Apparatur vor. Die resultierende Mischung mahlt man anschließend in einer Mühle, um die gewünschte Teilcheridurchmesserverteilung (in der Regel gemittelt 1 µm, bevorzugt gemittelt 0,5 µm) zu erreichen. Nach Einstellung der gewünschten Farbmittelkonzentration durch Zugabe von Lösungsmittel, Wasser und gegebenenfalls weiteren Hilfsmitteln filtriert man mit einer Filtriervorrichtung mit Feinabtrennung im Bereich von 1 bis 0,5 µm.

Als Ausgangsmaterial für Zubereitungen mit gelöstem Farbstoff a2) sind höher konzentrierte Farbstofflösungen, z.B. 10 bis 30 Gew.-% Flüssigeinstellungen von Farbstoffen, besonders geeignet. Diese werden optional entsalzt und filtriert (z.B. Nanofiltration), bevor die gewünschte Farbstoffkonzentration eingestellt wird.

Ein weiterer Aspekt der vorliegenden Erfindung ist ein Verfahren zum Bedrucken von flächigen oder dreidimensionalen Substraten nach dem Ink-Jet-Verfahren unter Verwendung der erfindungsgemäßen Farbmittelzubereitungen. Dazu druckt man die erfindungsgemäßen Farbmittelzubereitungen oder die erfindungsgemäßen Ink-Jet-Tinten auf das Substrat auf und fixiert den erhaltenen Druck anschließend optional.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Farbmittelzubereitungen als Tinten für das Bubble-Jet-Verfahren und für das Verfahren mittels eines piezoelektrischen Kristalls.

Ein weiterer Aspekt der vorliegenden Erfindung ist ein Verfahren zum Bedrucken von Substraten nach dem Ink-Jet-Verfahren unter Verwendung der erfindungsgemäßen Farbmittelzubereitungen mit anschließender Fixierung des Druckes. Die Fixierung kann auf verschiedene Weise erfolgen.

So ist eine Ausführungsform der vorliegenden Erfindung, im Anschluss an den eigentlichen Druck nach dem Ink-Jet-Verfahren unter Verwendung der erfindungsgemäßen Farbmittelzubereitungen ein Bindemittel in Form einer Dispersion oder Emulsion, bevorzugt in Form einer wässrigen Dispersion oder Emulsion, aufzutragen, um dessen Härtung, d.h. der chemischen Vernetzung des Bindemittels selbst, oder um die physikalische Trocknung der Bindemitteldispersion oder -emulsion zu bewirken.

Eine weitere Ausführungsform der vorliegenden Erfindung besteht darin, im Anschluss an den eigentlichen Druck nach dem Ink-Jet-Verfahren unter Verwendung der erfindungsgemäßen Farbmittelzubereitungen eine Folie, beispielsweise aus Polyethylenterephthalat, aufzulaminieren und so den Druck insbesondere vor Wasser- und Lichteinwirkung zu schützen.

Für das Auftragen des Bindemittels eignen sich prinzipiell alle Verfahren, mit denen eine strukturierte oder unstrukturierte Beschichtung erzeugt werden kann. Genannt seien insbesondere die Techniken des Siebdrucks, Klotzens und Spritzens und andere Techniken der vollflächigen Beschichtung wie Rollcoaten, Offsetdruck, Flexodruck und Gießverfahren.

Für die Fixierung des Druckes sind im Prinzip alle Arten von Bindemittelsystemen geeignet, wenn das Bindemittel nach dem eigentlichen Druck appliziert wird.

Man kann strahlungshärtbare, thermisch härtbare oder durch Luftoxidation trocknende, sogenannte lufttrocknende Bindemittel, also chemisch vernetzende Bindemittel, oder physikalisch trocknende Bindemitteldispersionen oder -emulsionen einsetzen, bei denen die flüssige Phase verdampft, beispielsweise Wasser oder eine organisches Lösemittel.

Die strahlungshärtbaren Bindemittel, die im erfindungsgemäßen Verfahren eingesetzt werden, können durch Strahlung hoher Energie, d.h. elektromagnetische Strahlung insbesondere von 220 bis 450 nm, oder Elektronenstrahlung härten. Geeignet sind dazu radikalisch und kationisch polymerisierbare Bindemittelkomponenten sowie deren Mischungen. Derartige Bindemittel sind als solche bekannt und beispielsweise beschrieben in Chemistry and Technology of UV and EB Formulation for Coatings, Inks and Paints, SITA Technology, London 1991; UV and EB Curing Formulation for Printing Inks and Paints, SITA Technology, London 1991, und Vinyl Ethers - The innovative Challenge, Firmenschrift der BASF Aktiengesellschaft, 1997.

Als Beispiele für strahlungshärtbare Bindemittel seien acrylatgruppenhaltige, vinylgruppenhaltige und epoxidgruppenhaltige Monomere, Prepolymere und Polymere und deren Mischungen genannt.

Bei den acrylatgruppenhaltigen Bindemitteln handelt es sich insbesondere um Prepolymere auf Acrylat- oder Methacrylatbasis, wobei Prepolymere auf Acrylatbasis besonders bevorzugt sind.

Bevorzugte Acrylate und Methacrylate enthalten in der Regel 2 bis 20, bevorzugt 2 bis 10 und besonders bevorzugt 2 bis 6 copolymerisierbare ethylenisch ungesättigte Doppelbindungen pro Molekül. Das mittlere Molekulargewicht Mₙ beträgt bevorzugt ≤ 15.000 g, besonders bevorzugt ≤ 5000 g und ganz besonders bevorzugt 180 bis 3000 g, bestimmt durch Gelpermeationschromatographie (GPC) mit Polystyrol als Standard und THF als Elutionsmittel.

Als geeignete (Meth)Acrylatverbindungen seien beispielsweise (Meth)acrylsäureester und dabei bevorzugt Acrylsäureester von mehrwertigen Alkoholen genannt, insbesondere solchen, die neben den Hydroxylgruppen nur Ethergruppen oder keine weiteren funktionalen Gruppen enthalten. Beispiele für solche Alkohole sind zweiwertige Alkohole wie Ethylenglykol, Propylenglykol sowie höhere Kondensationsprodukte wie Diethylenglykol, Triethylenglykol, Dipropylenglykol, Tripropylenglykol, außerdem 1,3-Propandiol, 1,2-Butandiol, 1,4-Butandiol, 1,2-Pentandiol, 1,2-Hexandiol, 1,6-Hexandiol, Neopentylglykol, alkoxylierte Phenole und Bisphenole wie beispielsweise ethoxyliertes Bisphenol A, Cyclohexandimethanol. Weiterhin sind dreiwertige Alkohole wie beispielsweise Glycerin, Trimethylolpropan, 1,2,4-Butantriol, 1,2,3-Butantriol oder Trimethylolethan geeignet. Schließlich sind auch höherwertige Alkohole wie beispielsweise Pentaerythrit, Ditrimethylolpropan, Dipentaerythrit, Sorbit, Mannit und die entsprechenden alkoxylierten, insbesondere ethoxylierten oder propoxylierten Derivate genannt.

Die Alkoxylierungsprodukte sind in bekannter Weise durch Umsetzung der entsprechenden Alkohole mit Alkylenoxiden, insbesondere Ethylenoxid und Propylenoxid, erhältlich. Als Katalysatoren können saure Verbindungen, beispielsweise SbCl₅, oder auch basische Verbindungen, beispielsweise NaOCH₃, eingesetzt werden.

Als Methacrylatverbindungen seien weiterhin Polyester(meth)acrylate genannt, wobei es sich um die (Meth)acrylsäureester von Polyesterolen handelt, die gesättigt oder ungesättigt sein können.

Geeignete Polyesterole werden beispielsweise durch Veresterung von Di- und Polycarbonsäuren, bevorzugt Dicarbonsäuren, mit Polyolen hergestellt. Bevorzugt werden als Dicarbonsäuren Bernsteinsäure, Glutarsäure, Adipinsäure, Sebacinsäure, Maleinsäure, Fumarsäure, Phthalsäure, Isomere der Phthalsäure sowie deren Hydrierungsprodukte sowie veresterbare Derivate wie beispielsweise Anhydride oder Dimethylester oder Diethylester der oben genannten Säuren. Als Polyole sind Ethylenglykol, Propylenglykol sowie höhere Kondensationsprodukte wie Diethylenglykol, Triethylenglykol, Dipropylenglykol, Tripropylenglykol, außerdem 1,3-Propandiol, 1,2-Butandiol, 1,4-Butandiol, 1,2-Pentandiol, 1,2-Hexandiol, 1,6-Hexandiol sowie Polyalkylenglykole auf Basis von Ethylenglykol und Propylenglykol geeignet.

Ein gutes Verfahren zur Herstellung der oben genannten (Meth)Acrylatverbindungen wird beispielsweise in EP-A 0 279 303 beschrieben.

Weiterhin kann es sich bei den (Meth)Acrylatverbindungen auch um Epoxid- oder Urethan(meth)acrylate handeln. Epoxid(meth)acrylate sind beispielsweise durch Umsetzung von epoxidierten Olefinen oder Mono-, Di- oder Polyglycidylethern wie beispielsweise Bisphenol-A-diglycidylether mit (Meth)Acrylsäure erhältlich. Urethan(meth)acrylate sind insbesondere Umsetzungsprodukte von Hydroxyalkyl(meth)acrylaten mit Di- oder Polyisocyanaten.

Weiterhin kann es sich bei den (Meth)Acrylatverbindungen um Melamin(meth)acrylate und Silicon(meth)acrylate handeln.

Die (Meth)Acrylatverbindungen können auch ionisch, beispielsweise mit Säuregruppen oder Ammoniumgruppen, oder nichtionisch, beispielsweise mit Aminogruppen, modifiziert werden. Außerdem werden sie bevorzugt in Form wässriger Dispersionen oder Emulsionen eingesetzt, die als solche aus EP-A 0 704 469 und EP-A 0 012 339 bekannt sind.

Weiterhin können die (Meth)Acrylatverbindungen zur Einstellung der Viskosität mit sogenannten Reaktivverdünnern gemischt werden. Als Reaktivverdünner eignen sich beispielsweise vinylgruppenhaltige Monomere, insbesondere

N-Vinylverbindungen wie N-Vinylpyrrolidon, N-Vinylcaprolactam und N-Vinylformamid und
- Vinylether,: beispielsweise Ethylvinylether, Propylvinylether, n-Butylvinylether, Isobutylvinylether, sec.-Butylvinylether, tert.-Butylvinylether, Amylvinylether, 2-Ethylhexylvinylether, n-Dodecylvinylether, n-Octadecylvinylether und Cyclohexylvinylether, Ethylenmonoglykolvinylether und Ethylenmonoglykoldivinylether, Di-, Tri- und Tetraethylenglykolmono- und divinylether, Propylenglykoldivinylether, Polyethylenglykoldivinylether, Ethylenglykol-n-butylvinylether, Triethylenglykolmethylvinylether, Polyethylenglykolmethylvinylether, 1,4-Butandiolmono- und divinylether, 1,6-Hexandiolmono- und divinylether, Cycloehxandimethanolmono- und divinylether, Trimethylolpropanmono- und divinylether, Aminopropylvinylether, Diethylaminoethylvinylether und Polytetrahydrofurandivinylether;
- Vinylester,: beispielsweise Vinylacetat, Vinylpropionat, Vinylstearat, Vinyllaurat,

Vinylaromaten, beispielsweise Styrol, Vinyltoluol, 2- und 4-n-Butylstyrol und 4-n-Decylstyrol;
sowie acrylathaltige Monomere, beispielsweise Phenoxyethylacrylat, tert.-Butylcyclohexylacrylat, 1,6-Hexandioldiacrylat, Tripropylenglykoldiacrylat und Trimethylolpropantriacrylat.

Vinylgruppenhaltige Verbindungen können auch direkt als kationisch polymerisierbare Bindemittel eingesetzt werden.

Weiterhin geeignete strahlungshärtbare Bindemittel sind epoxygruppenhaltige Verbindungen, beispielsweise Cyclopentenoxid, Cyclohexenoxid, epoxidiertes Polybutadien, epoxidiertes Sojabohnenöl, (3',4'-Epoxycyclohexylmethyl)-3,4-epoxycyclohexancarboxylat und Glycidylether, beispielsweise 1,4-Butandioldiglycidylether, 1,6-Hexandioldiglycidylether, Bisphenol-A-diglycidylether und Pentaerythritdiglycidylether, wobei ebenfalls kationisch polymerisierbare Monomere, beispielsweise ungesättigte Aldehyde und Ketone, Diene wie Butadien oder Isopren, Vinylaromaten wie Styrol, N-subsituierte Vinylamine wie N-Vinylcarbazol und cyclische Ether wie Tetrahydrofuran mitverwendet werden können.

Insbesondere dann, wenn die Bindemittelhärtung mittels UV-Strahlung erfolgt, empfiehlt es sich, das Bindemittel zusammen mit einem Photoinitiator, welcher die Polymerisation in Gang setzt, auf den Druck aufzubringen.

Geeignete Photoinitiatoren für radikalische Photopolymerisationen sind z.B. Benzophenon und Benzophenonderivate wie beispielsweise 4-Phenylbenzophenon oder 4-Chlorbenzophenon, Acetophenonderivate wie beispielsweise 2-Hydroxy2,2-dimethylacetophenon und 2,2-Dimethoxy2-phenylacetophenon, 1-Benzoylcyclohexan-1-ol, Benzoin und Benzoinether wie Methyl-, Ethyl- und Butlbenzoinether, Benzilketale wie Benzildimethylketal, 2-Methyl-1-[4-(methylthio)phenyl]-2-morpholinopropan-1-on, Acylphosphinoxide wie 2,4,6-Trimethylbenzoyldiphenylphophinoxid und Bisacylphosphinoxide.

Für kationische Photopolymerisationen geeignete Photoinitiatoren sind beispielsweise
- Aryldiazoniumsalze wie beispielsweise 4-Methoxybenzoldiazoniumhexafluorophosphat, Benzoldiazoniumtetrafluoroborat und Toluoldiazoniumtetrafluoroarsenat;
- Aryliodoniumsalze wie Diphenyliodoniumhexafluoroarsenat;
- Arylsulfoniumsalze wie Triphenylsulfoniumhexafluorophosphat, Benzol- und Toluolsulfoniumhexfluorophosphat und Bis[4-diphenylsulfonio-phenyl]sulfid-bis-hexafluorophosphat;
- Disulfone wie Diphenyldisulfon und Phenyl-4-tolyldislfon,
- Diazodisulfone
- Imidotriflate
- Benzointosylate
- Isochinoliniumsalze wie N-Ethoxyisochinoliniumhexafluorophosphat;
- Phenylpyridiniumsalze wie N-Ethoxy-4-phenylpyridiniumhexafluorophosphat;
- Picoliniumsalze wie N-Ethoxy-2-picoliniumhexafluorophosphat;
- Ferroceniumsalze und Titanocene.

Wenn die Anwesenheit eines Photoinitiators erforderlich ist, so wird er in der Regel in Mengen von 0,1 bis 10 Gew.-%, bevorzugt bis 8 Gew.-%, bezogen auf das Bindemittel, eingesetzt.

Eine anschließende Härtung des Bindemittels, d.h. die Fixierung des Drucks, kann beim Einsatz strahlungshärtbarer Bindemittel in an sich bekannter Weise mit Hilfe energiereicher Strahlung erfolgen. Dazu bestrahlt man den Druck entweder unter Inertgasatmosphäre, beispielsweise unter Stickstoff, mit Elektronen (Elektronenstrahlhärtung) oder mit energiereicher elektromagnetischer Strahlung, bevorzugt im Wellenlängenbereich von 220 bis 450 nm. Die gewählten Lichtintensitäten sind dabei an die Härtungsgeschwindigkeit anzupassen, um einen Abbau des Farbmittels zu vermeiden. Bei einer Lampenleistung von 210 bis 240 W/cm kann die Härtungsgeschwindigkeit je nach Art und Konzentration des Photoinitiators bis zu 100 m/min betragen.

Bei den thermisch härtbaren Bindemitteln erfolgt die Vernetzung in der Regel über Polykondensations- oder Polyadditionsreaktionen. Derartige Bindemittel sind ebenfalls als solche bekannt und beispielsweise in "Glasurit-Handbuch Lacke und Farben" der BASF Farben und Fasern AG, Vincentz Verlag Hannover, 1984, und in "Lackharze - Chemie, Eigenschaften, Anwendungen", Karl-Hanser-Verlag, München/Wien, 1996 beschrieben.

Besonders geeignet sind beispielsweise durch Polykondensation vernetzende Bindemittel auf Basis von Methylolgruppenhaltigen Acrylaten.

Als bevorzugte Systeme seien dabei Mischungen von
- 1 bis 10 Gew.-% N-Methylol(meth)acrylamid oder deren C₁-C₄-Alkylethern und gewünschtenfalls Halogenhydringruppen enthaltenden Monomeren wie 2-Hydroxy-3-chlorpropylenacrylat und
- 90 bis 99 Gew.-% Comonomeren, z.B. aus der Gruppe Butadien, Styrol, (Meth)Acrylsäure, (Meth)Acrylnitril, (Meth)Acrylsäure- und Vinylester mit bis zu 12 C-Atomen, Vinylchlorid und N-Vinylpyrrolidon
genannt, wie sie beispielsweise in der DE-A 16 19 656 beschrieben sind.

Unter Einwirkung von Säuren bzw. unter Wärmeeinfluss Protonen abspaltenden Verbindungen wie Ammoniumphosphaten bewirken die methylolgruppenhaltigen Acrylsäurederivate zusätzliche Vernetzung.

Beispiele für lufttrocknende Bindemittel, bei denen aliphatische Doppelbindungen durch Einwirkung von Luftsauerstoff oxidativ vernetzt werden, sind trocknende Öle wie Leinöl, Holzöl und Safloröl (Färberdistelöl).

Als weitere Beispiele für geeignete thermisch härtbare Bindemittel seien auf Polyurethanprepolymeren basierende Bindemittel genannt, die ebenfalls durch Polykondensation vernetzen.

Bringt man das Bindemittel in Form einer Dispersion oder Emulsion auf den mit den erfindungsgemäßen Farbmittelzubereitungen bedruckten Substraten auf, was eine bevorzugte Ausführungsform der vorliegenden Erfindung ist, so beträgt der Gehalt an Bindemittel in diesen Dispersionen bzw. Emulsionen 10 bis 60 Gew.-%, vorzugsweise 10 bis 30 Gew.-%. Üblicherweise wird so viel Bindemittel eingesetzt, dass sich ein etwa 1 bis 30 µm dicker trockener Schutzfilm auf dem Substrat ausbildet.

Üblicherweise werden die nach dem Ink-Jet-Verfahren bedruckten Flächen mit Wärme behandelt, um die Farbstoffe zu fixieren und zu entwickeln. Die Wärmeeinwirkung kann beispielsweise mit Wasserdampf oder Heißluft durchgeführt werden. Ein üblicher Temperaturbereich ist 160 bis 180 °C für 5 bis 8 Minuten. Bei Heißluft empfiehlt sich, das bedruckte Textil bei 180 bis 200 °C während 1 Minute zu behandeln.

In einer weiteren Ausführungsform der vorliegenden Erfindung nimmt man eine Entwicklung durch Einwirkung von IR- oder Mikrowellenstrahlung oder von energiereicher elektromagnetischer Strahlung vor.

In einer weiteren Variante der vorliegenden Erfindung fügt man Dispersionen der oben genannten strahlungshärtbaren, thermisch härtbaren oder durch Luftoxidation trocknenden Bindemittel schon vor dem Drucken den erfindungsgemäßen Farbmittelzubereitungen oder den erfindungsgemäßen Tinten zu. Ein weiterer Gegenstand der vorliegenden Erfindung sind Farbmittelzubereitungen, enthaltend Dispersionen der oben genannten Bindemittel. Ein weiterer Gegenstand der vorliegenden Erfindung ist außerdem ein Verfahren zum Bedrucken von Substraten nach dem Ink-Jet-Verfahren unter Verwendung der eingangs definierten erfindungsgemäßen Farbmittelzubereitungen, denen man vor dem Druck ein Bindemittel zugefügt hat.

Als Substratmaterialien sind geeignet:
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika

Die erfindungsgemäßen Farbmittelzubereitungen zeichnen sich als Ink-Jet-Tinten mit insgesamt vorteilhaften Anwendungseigenschaften, vor allem gutem Anschreibverhalten und gutem Dauerschreibverhalten (Kogation) sowie, insbesondere bei Verwendung der besonders bevorzugten Lösungsmittelkombination, gutes Trocknungsverhalten, aus und ergeben Druckbilder hoher Qualität, d.h. hoher Brillanz und Farbtiefe sowie hoher Reib-, Licht-, Wasser- und Nassreibechtheit. Besonders geeignet sind sie zum Drucken auf gestrichenes und ungestrichenes Papier sowie Textil.

Eine weitere Ausführungsform der vorliegenden Erfindung sind Substrate, insbesondere textile Substrate, die nach einem der oben genannten erfindungsgemäßen Verfahren bedruckt wurden und sich durch besonders scharf gedruckte Bilder oder Zeichnungen auszeichnen.

Außerdem wurde festgestellt, dass sich die erfindungsgemäßen Farbmittelzubereitungen besonders gut für den Tintenstrahldruck nach dem Transferverfahren eignen, wenn man Dispersfarbstoff a1) einsetzt. Beim Transferdruckverfahren wird zunächst das Bild auf ein Trägermaterial gedruckt, beispielsweise auf Papier, insbesondere speziell für dieses Verfahren hergestelltes Papier der Firmen Coldenhove (Niederlande) und Cam Tenero (Schweiz), und von dort mit Hilfe von Wärme auf Substrate, beispielsweise aus Textil, übertragen. Eine weitere Ausführungsform der vorliegenden Erfindung sind daher ein Verfahren zum Bedrucken von Substraten, bevorzugt textilen Substraten, nach dem Transferdruckverfahren unter Verwendung der erfindungsgemäßen Farbmittelzubereitungen sowie Substrate, bevorzugt textile Substrate, bedruckt nach dem Transferdruckverfahren unter Verwendung der erfindungsgemäßen Farbmittelzubereitungen. Die Farbmittelzubereitungen für den Transferdruck werden vorzugsweise auf Basis eines Dispersfarbstoffes hergestellt. Besonders bevorzugt werden die Tinten für den Transferdruck auf Basis der folgenden Farbmittel hergestellt:
Disperse Yellow 54,
Disperse Red 11, 60,
Disperse Blue 72, 289, 326, 332, 347, 359;
Disperse Violet 17.

Die erfindungsgemäßen Farbmittelzubereitungen lassen sich schließlich vorzüglich als Tinte für Füllfederhalter oder zur Herstellung von Tinten für Füllfederhalter verwenden. Ein weiterer Aspekt der vorliegenden Erfindung ist daher die Verwendung der erfindungsgemäßen Farbmittelzubereitungen als oder zur Herstellung von Tinten für Füllfederhalter sowie Tinten für Füllfederhalter, enthaltend die erfindungsgemäßen Farbmittelzubereitungen. Die Farbmittelzubereitungen können entweder sofort nach der Herstellung in gängige Tintenfässer oder Tintenpatronen gefüllt werden oder aber mit gängigen Additiven verdünnt werden.

Die so erhältlichen Tinten zeichnen sich durch ein vorzügliches Anwendungsprofil aus. Beispielhaft sei ein ausgezeichnetes Trocknungsverhalten genannt und die Beobachtung, dass die Tinten vorzüglich aus der Leitung fließen, was einen sehr gleichmäßigen Auftrag beispielsweise auf Papier ermöglicht.

### Beispiele

### Herstellung erfindungsgemäßer Farbmittelzubereitungen

### 1. Schritt: Herstellung des Dispergiermittels C 2-A

Das Dispergiermittel C 2-A wurde wie in US 5,186,846 als "Dispersant 4" beschrieben hergestellt.

Eine Crackerfraktion der folgenden Zusammensetzung (Tabelle 1a) dienste als Ausgangsmaterial:

**Tabelle 1a**

| | Gew.-% in der Aromatenfraktion |
|---|---|
| Naphthalin | 54,60 |
| 2-Methylnaphthalin | 14,00 |
| 1-Methylnaphthalin | 8,30 |
| Inden | 8,40 |
| Diphenyl | 3,20 |
| Methylinden | 1,95 |
| Acenaphthen | 1,70 |
| Fluoren | 1,30 |
| Indan | 1,22 |
| Phenanthren | 1,10 |
| Methylindan (Isomerengemisch) | 1,13 |
| Ethylnaphthalin (Isomerengemisch) | 0,90 |
| para- und meta-Xylol | 0,80 |
| Tetralin | 0,80 |
| Styrol | 0,60 |

128 g der Crackerfraktion wurden mit 25 g Benzoesäure gemischt und in einem Kessel auf 90°C erwärmt. Danach wurden 107 g Oleum mit 65 Gew.-% SO₃ über einen Zeitraum von 2 Stunden zugefügt, wobei darauf geachtet wurde, dass die Temperatur nicht über 95°C stieg. Nach beendeter Oleumzugabe wurde auf 140°C erhitzt und bei dieser Temperatur etwa 3 ½ Stunden gerührt. Anschließend wurde auf 80°C abgekühlt, 150 ml Wasser wurden zugegeben und danach 50 g einer 30 Gew.-% Formalinlösung. Die einsetzende Kondensationsreaktion wurde über einen Zeitraum von 8 Stunden bei 100°C fortgesetzt.

Danach wurde ½ l Wasser zugefügt, gefolgt von 131 g einer 50 Gew.-% wässriger Natronlauge. Die Mischung wurde bei einer Temperatur von 90°C eine Stunde lang gerührt. Anschließend wurden weitere 365 ml Wasser zugefügt und mit Hilfe von 20 Gew.-% H₂SO₄ ein pH von 8,4 eingestellt. Schließlich wurde das Produkt C 2-B durch sprühtrocknen über einen Sprühturm isoliert.

Das Produkt wies die folgenden charakteristischen Parameter auf:
α- : β-Naphthalinsulfonsäure 1 : 4,5, Gehalt an Na₂SO₄: 1,5 Gew.-%.

### 2. Schritt: Herstellung der Mixkomponente

In einem Dissolver wurden 12,5 g Tectilon® Blau Base 6G (kommerziell erhältlich bei Ciba Specialties) mit 6,25 g Pluriol E 400® (kommerziell erhältlich von BASF Aktiengesellschaft), Dispergiermittel C2-A, 0,3 g Biocid A und 0,4 g Biocid B mit 0,5 g Triethanolamin vermischt und mit 67,55 ml vollentsalztem Wasser aufgefüllt. Diese Mischung wurde über einen Zeitraum von 5 Stunden in einer Kugelmühle vermahlen, bis der maximale Teilchendurchmesser 1 µm betrug.

Die Zusammensetzung dieser und weiterer analog hergestellter Mixkomponenten geht aus Tabelle 2 hervor. Alle Einsatzstoffe sind in Gramm angegeben.

**Tabelle 2:**

| Einsatzstoff | Türkis | Gelb | Rot | Blau 1 | Blau 2 |
|---|---|---|---|---|---|
| Inthratherm Blue P-305 NT | | | | | 12,5 |
| Chinonblau PM | | | | 12,5 | |
| Palanil Rot BFW-L | | | 15 | | |
| Palanil® Gelb 3GE | | 15 | | | |
| Tectilon® Blau | 12,5 | | | | |
| Pluriol E 400® | 6,25 | 15 | 7,5 | 12,5 | 12,5 |
| C2-A | 12,5 | 7,5 | 15 | 6,25 | 6,25 |
| Biocid A | 0,3 | 0,4 | 0,4 | 0,3 | 0,3 |
| Biocid B | 0,4 | 0,5 | 0,5 | 0,4 | 0,4 |
| Triethanolamin | 0,5 | 0,5 | 0,5 | 0,5 | 0,5 |
| VE-Wasser | 67,55 | 61,1 | 61,1 | 67,55 | 67,55 |

### 3. Schritt: Formulierung einer hochkonzentrierten Tinte

In einem Becherglas wurde 32,0 g einer nach 2. hergestellten türkisfarbenen Mixkomponente mit 5,0 g Verbindung I a 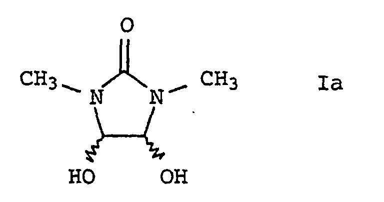 versetzt und weiterhin mit 10 g Glycerin, 3 g Pluriol E 400®, 1 g Pluriol E 4000®, 0,5 g Biocid D, 0,1 g Triethanolamin, 0,2 g Tego Wet 260® und 48,2 ml vollentsalztem Wasser vermischt.

Die Zusammensetzungen weiterer Tinten gehen aus Tabelle 3 (siehe unten) hervor.

**Tabelle 3:**

| Formulierungen von Tinten | | | |
|---|---|---|---|
| Bestandteil | Tinte 1 (türkis) | Tinte 2 (türkis) | Tinte 3 (türkis) |
| Mixkomponente | 32,0 | 32,0 | 32,0 |
| Verbindung Ia | 5,0 | 5,0 | 5,0 |
| Pluriol E 400 | 3,0 | 3,0 | 3,0 |
| Pluriol E 4000 | 1,0 | 1,0 | 1,0 |
| Glycerin | 10,0 | | |
| 1,2-Pentandiol | | 10,0 | |
| 1,2-Propandiol | | | 10,0 |
| Biocid D | 0,5 | 0,5 | 0,5 |
| Tego Wet 260 | 0,2 | 0,2 | 0,2 |
| Triethanolamin | 0,1 | 0,1 | 0,1 |
| VE-Wasser [ml] | 48,2 | 48,2 | 48,2 |
| Viskosität [mm²/s] | 2,537 | 2,814 | 2,688 |

Alle Komponenten in g, wenn nicht anders angegeben. Die Viskosität wurde nach DIN 51662 mit einem Ubbelohde-Viskosimeter bestimmt.

Dabei bedeuten:
- Biocid A:: 50 Gew.-% wässrige Lösung von Glutaraldehyd
- Biocid B:: 4 Gew.-% wässrige Lösung von Tetramethylolacetylendiharnstoff
- Biocid C:: 20 Gew.-% Lösung von 1,2-Benzisothiazolon-3-on in wässrigem Ethylenglykol
- Biocid D:: 10% Gew.-% Lösung von 1,2-Benzisothiazolon-3-on in wässrigem Propylenglykol
- Netzmittel:: 2-(3-Hydroxypropyl)heptamethyltrisiloxan, zunächst ethoxyliert und dann propoxyliert (11 mol Ethylenoxid/ 5 mol Propylenoxid)

### 4. Schritt

Die im 3. Schritt erhaltene Tinte wurde mit einem Thermokopfdrukker EPSON 3000 Stylus Color auf DIN A3-Papier verdruckt. Es wurden Drucke mit vorzüglicher Schärfe der Linien erhalten. Auch nach 40 Blatt Papier war keine Düse ausgefallen, desgleichen nach 5 m² Druck. Nach Stehenlassen der Tinte über 6 Tage bei Raumtemperatur wurden ebenfalls vorzügliche Drucke ohne Streifen erzeugt.

Tinten 4 und 5 sowie Vergleichsbeispiele V1 bis V4 (verdünnte Tinten)

Ausgehend von den Mixkomponenten Türkis und Blau 2 (siehe Schritt 2) wurden in einem Becherglas die in Tabelle 4 aufgeführten Tinten formuliert.

Für die Vergleichsversuche wurden an Stelle von I a die folgenden Harnstoffderivate verwendet:

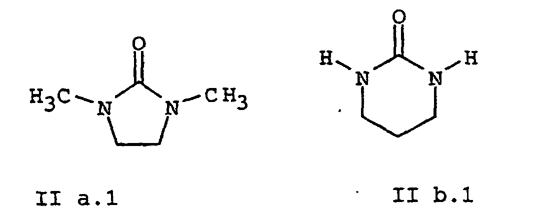

**Tabelle 4:**

| Zusammensetzungen von verdünnten Tinten | | | | | | |
|---|---|---|---|---|---|---|
| Bestandteile | Tinte 4 | Tinte 5 | Tinte V1 | Tinte V2 | Tinte V3 | Tinte V4 |
| Mixkomponente Türkis | | 10,0 | | | 10,0 | 10,0 |
| Mixkomponente Blau I | 10,0 | | 10,0 | 10,0 | | |
| Glycerin | 8,0 | 8,0 | 8,0 | 8,0 | 8,0 | 8,0 |
| Pluriol E 400® | 3,0 | 3,0 | 3,0 | 3,0 | 3,0 | 3,0 |
| Pluriol E 4000® | 1,0 | 1,0 | 1,0 | 1,0 | 1,0 | 1,0 |
| Dispergiermittel C2-A | 2,0 | 2,0 | 2,0 | 2,0 | 2,0 | 2,0 |
| Tego Wet 260® | 0,1 | 0,1 | 0,1 | 0,1 | 0,1 | 0,1 |
| Biocid D | 0,48 | 0,48 | 0,48 | 0,48 | 0,48 | 0,48 |
| Triethanolamin | 0,05 | 0,05 | 0,05 | 0,05 | 0,05 | 0,05 |
| VE-Wasser [ml] | 85,37 | 85,37 | 85,37 | 85,37 | 85,37 | 85,37 |
| Zwischensumme | 100,0 | 100,0 | 100,0 | 100,0 | 100,0 | 100,0 |
| I a | 5,0 | 5,0 | | | | |
| II a.1 | | | 5,0 | 5,0 | | |
| II b.1 | | | | | 5,0 | 5,0 |
| Summe | 105,0 | 105,0 | 105,0 | 105,0 | 105,0 | 105,0 |

Alle Mengenangaben in g, wenn nicht anders angegeben.

Die Tinten wurden mit einem Drucker der Marke Epson 3000 Stylus Color auf DIN-A3 Papiere der Marke Coldenhove HTR 2000 verdruckt. Die Druckqualität war jeweils gut.

Die Tinten wurden 5 Tage bei 60°C gelagert und die Druckexperimente wiederholt.

Die mit den erfindungsgemäßen Tinten hergestellten Drucke zeigten einen sehr guten Konturenstand sowie einheitlich brillant gefärbte Flächen.

Die mit den Vergleichstinten hergestellten Drucke wirkten weniger einheitlich, und der Konturenstand war nicht so gut. Unter dem Mikroskop sah man bereits bei 75-facher Vergrößerung, dass insbesondere bei Verwendung der Vergleichstinten V2 und V4 das Farbmittel in Form größerer Kristallnadeln vorlag. Bei Verwendung der Vergleichstinten V1 und V3 ließ sich eine beginnende Phasentrennung beobachten.

### Beispiele für die Verwendung als Füllfedertinte

Die Tinten 4, V1 und V2 wurden jeweils in Tintenpatronen gefüllt und mit einem Füllfederhalter der Marke Parker Frontier® auf Papiere der Marken Coldenhove HTR 2000, Neusiedler Color Copy, Epson Super Fine Paper®, HP Premium InkJet Glossy Paper® und Motiv Copy Paper verschrieben. Zu Vergleichszwecken wurden gerade Linien gezogen. Die unter Verwendung der erfindungsgemäßen Tinte 4 gezogenen Linien waren vollkommen einheitlich breit, während die Vergleichstinten V1 und V2 keine einheitliche Breite zeigten und auf Motiv Copy Paper sogar einige Unterbrechungen aufwiesen.

## Patentansprüche

1. Farbmittelzubereitungen, enthaltend
a) mindestens ein Farbmittel, ausgewählt aus in Wasser schwer löslichen Farbmitteln a1) und wasserlöslichen Farbstoffen a2),
b) Wasser,
c) im Falle von in Wasser praktisch nicht oder schwer löslichen Farbmitteln a1) mindestens einen Dispergiermittel und
d) mindestens eine Verbindung der allgemeinen Formel I 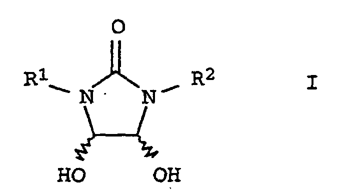
wobei in Formel I die Variablen wie folgt definiert sind:
R¹, R² unabhängig voneinander ausgewählt aus
Wasserstoff,
C₁-C₄-Alkyl,
CH₂-O-R³, wobei
R³ Wasserstoff oder C₁-C₄-Alkyl bedeutet.

2. Farbmittelzubereitungen nach Anspruch 1, **dadurch gekennzeichnet, dass** in Formel I R¹ und R² jeweils gleich sind.

3. Farbmittelzubereitungen nach Anspruch 1 oder 2, **dadurch gekennzeichnet, dass** in Formel I R¹ und R² jeweils Methyl oder Wasserstoff sind.

4. Farbmittelzubereitungen nach mindestens einem der Ansprüche 1 bis 3, **dadurch gekennzeichnet, dass** sie als Dispergiermittel c) Arylsulfonsäure-Formaldehyd-Kondensationsprodukte enthalten.

5. Farbmittelzubereitungen nach mindestens einem der Ansprüche 1 bis 4, **dadurch gekennzeichnet, dass** sie als Farbmittel a1) ein dispergiertes Pigment, einen dispergierten Dispersfarbstoff oder einen Solventfarbstoff enthalten.

6. Verfahren zum Bedrucken von Substraten nach dem Ink-Jet-Verfahren unter Verwendung von Farbmittelzubereitungen nach mindestens einem der Ansprüche 1 bis 5.

7. Verfahren nach Anspruch 6, **dadurch gekennzeichnet, dass** man nach dem eigentlichen Bedrucken die Bedruckung fixiert.

8. Verfahren nach Anspruch 7, **dadurch gekennzeichnet, dass** man nach dem eigentlichen Bedrucken ein Bindemittel in Form einer Dispersion oder Emulsion auf dem bedruckten Substrat aufträgt.

9. Verfahren nach den Ansprüchen 7 oder 8, **dadurch gekennzeichnet, dass** man zur Fixierung eine Dispersion oder Emulsion eines thermisch härtbaren Bindemittels, eines durch Luftoxidation trocknenden Bindemittels oder eines strahlungshärtbaren Bindemittels, die optional einen Photoinitiator enthält, oder eine physikalisch trocknende Bindemitteldispersion oder Bindemittelemulsion aufträgt.

10. Verfahren nach den Ansprüchen 7 bis 9, **dadurch gekennzeichnet, dass** man das Bindemittel durch Einwirken von IR-Strahlung, Elektronenstrahlung oder energiereicher elektromagnetischer Strahlung aushärtet.

11. Verfahren nach Anspruch 7, **dadurch gekennzeichnet, dass** man nach dem eigentlichen Bedrucken eine Folie auflaminiert.

12. Verfahren zum Bedrucken von Substraten, bevorzugt textilen Substraten, nach dem Transferdruckverfahren unter Verwendung der Farbmittelzubereitungen nach den Ansprüchen 1 bis 5.

13. Verfahren zum Bedrucken von Substraten nach dem Ink-Jet-Verfahren unter Verwendung von Farbmittelzubereitungen nach mindestens einem der Ansprüche 1 bis 5, **dadurch gekennzeichnet, dass** man den Farbmittelzubereitungen vor dem Druck ein Bindemittel zugefügt hat.

14. Substrate, bedruckt nach einem Verfahren nach einem der Ansprüche 6 bis 13.

15. Verwendung von Farbmittelzubereitungen nach den Ansprüchen 1 bis 5 als oder zur Herstellung von Tinten für Füllfederhalter.

## Claims

1. Colorant preparations comprising
a) at least one colorant selected from sparingly water-soluble colorants a1) and water-soluble dyes a2),
b) water,
c) at least one dispersant in the case of substantially water-insoluble or sparingly water-soluble colorants a1), and
d) at least one compound of the general formula I 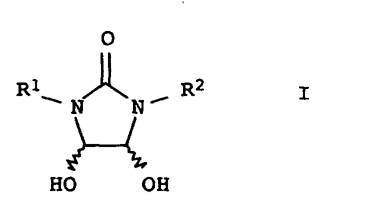
where
R¹ and R² are independently selected from
hydrogen,
C₁-C₄-alkyl and
CH₂-O-R³, where
R³ is hydrogen or C₁-C₄-alkyl.

2. Colorant preparations as claimed in claim 1, wherein R¹ and R² are the same.

3. Colorant preparations as claimed in claim 1 or 2, wherein R¹ and R² are each methyl or hydrogen.

4. Colorant preparations as claimed in at least one of claims 1 to 3, wherein said dispersant c) comprises arylsulfonic acid-formaldehyde condensation products.

5. Colorant preparations as claimed in at least one of claims 1 to 4, wherein said colorant a1) is a dispersed pigment, a dispersed disperse dye or a solvent dye.

6. A process for printing substrates by the ink jet process, which comprises using colorant preparations as claimed in at least one of claims 1 to 5.

7. A process as claimed in claim 6, wherein the print is fixed after the actual printing.

8. A process as claimed in claim 7, wherein a binder in the form of a dispersion or emulsion is applied to the printed substrate after the actual printing.

9. A process as claimed in claim 7 or 8, wherein a dispersion or emulsion of a thermally curable binder, of an air-drying binder or of a radiation-curable binder, said dispersion or emulsion optionally further comprising a photoinitiator, or a physically drying binder dispersion or emulsion is applied for fixation.

10. A process as claimed in any of claims 7 to 9, wherein said binder is cured by the action of IR radiation, electron beam radiation or high energy electromagnetic radiation.

11. A process as claimed in claim 7, wherein a film is laminated onto the print after the actual printing.

12. A process for printing substrates, preferably textile substrates, by the transfer printing process, which comprises using the colorant preparations of any of claims 1 to 5.

13. A process for printing substrates by the ink jet process using colorant preparations of at least one of claims 1 to 5, which comprises having added a binder to the colorant preparations prior to printing.

14. Substrates printed by a process as claimed in any of claims 6 to 13.

15. The use of colorant preparations as claimed in claims 1 to 5 as or in inks for fountain pens.

## Revendications

1. Compositions de produit colorant, contenant
a) au moins une matière colorante choisie parmi des matières colorantes difficilement solubles dans l'eau a1) et des colorants solubles dans l'eau a2),
b) de l'eau,
c) dans le cas de matières colorantes a1) difficilement ou pratiquement non solubles dans l'eau, au moins un agent dispersant, et
d) au moins un composé de la formule générale I : 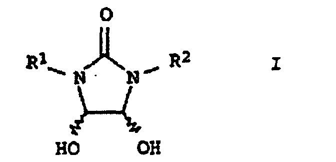
dans laquelle les variables sont définies comme suit :
R¹, R² sont, indépendamment l'un de l'autre, choisis parmi
de l'hydrogène,
de l'alkyle en C₁-C₄,
CH₂-O-R³, où
R³ représente de l'hydrogène ou de l'alkyle en C₁-C₄.

2. Compositions de produit colorant suivant la revendication 1, **caractérisées en ce que**, dans la formule I, R¹ et R² sont respectivement identiques.

3. Compositions de produit colorant suivant l'une des revendications 1 et 2, **caractérisées en ce que**, dans la formule I, R¹ et R² sont respectivement du méthyle ou de l'hydrogène.

4. Compositions de produit colorant suivant au moins l'une des revendications 1 à 3, **caractérisées en ce qu'**elles contiennent, comme agent dispersant c), des produits de condensation d'acide arylsulfonique-formaldéhyde.

5. Compositions de produit colorant suivant au moins l'une des revendications 1 à 4, **caractérisées en ce qu'**elles contiennent, comme matière colorante a1), un pigment dispersé, une matière colorante dispersée ou une matière colorante solvante.

6. Procédé d'impression de substrats suivant le procédé à jet d'encre, faisant usage de compositions de produit colorant suivant au moins l'une des revendications 1 à 5.

7. Procédé suivant la revendication 6, **caractérisé en ce qu'**on fixe l'impression après l'impression proprement dite.

8. Procédé suivant la revendication 7, **caractérisé en ce que**, après l'impression proprement dite, on applique sur le substrat imprimé un fixateur sous la forme d'une dispersion ou émulsion.

9. Procédé suivant l'une des revendications 7 et 8, **caractérisé en ce que**, pour la fixation, on applique une dispersion ou émulsion d'un fixateur thermodurcissable, d'un fixateur séchant par oxydation à l'air ou d'un fixateur durcissable par un rayonnement, qui contient éventuellement un photo-initiateur, ou une dispersion ou émulsion de fixateur séchant physiquement.

10. Procédé suivant l'une des revendications 7 à 9, **caractérisé en ce qu'**on durcit le fixateur par action d'un rayonnement IR, d'un rayonnement électronique ou d'un rayonnement électromagnétique de haute énergie.

11. Procédé suivant la revendication 7, **caractérisé en ce que**, après l'impression proprement dite, on lamine une feuille.

12. Procédé d'impression de substrats, de préférence de substrats textiles, suivant le procédé d'impression par transfert, faisant usage des compositions de produit colorant suivant l'une des revendications 1 à 5.

13. Procédé d'impression de substrats suivant le procédé à jet d'encre, faisant usage de compositions de produit colorant suivant au moins l'une des revendications 1 à 5, **caractérisé en ce que**, avant l'impression, on a ajouté aux compositions de produit colorant un fixateur.

14. Substrats, imprimés suivant le procédé suivant l'une des revendications 6 à 13.

15. Utilisation de compositions de produit colorant suivant l'une des revendications 1 à 5, comme encres pour des porte-plumes à remplir ou pour la préparation de celles-ci.
